# EUROPÄISCHE PATENTANMELDUNG

(11) **EP 4 764 746 A1**
(43) Veröffentlichungstag der Anmeldung: **24.06.2026**
(21) Anmeldenummer: 25211764.3
(22) Anmeldetag: 28.10.2025
(51) Int. Cl.: G05B 19/401, B23P 11/02, G05B 19/404

(54) **VERFAHREN ZUR KOMPENSATION VON MESSFEHLERN BEI DER VERMESSUNG VON WERKZEUGEN ODER WERKSTÜCKEN, INSBESONDERE BEI AUTOMATISIERTEN PROZESSEN, WIE BEISPIELSWEISE IN EINER MONTAGEVORRICHTUNG, INSBESONDERE SCHRUMPFVORRICHTUNG, ZUM AUTOMATISIERTEN EIN- UND AUSSPANNEN EINES WERKZEUGS IN EINEN WERKZEUGHALTER, MESSVORRICHTUNG ZUR VERMESSUNG VON WERKZEUGEN ODER WERKSTÜCKEN SOWIE MONTAGEVORRICHTUNG, INSBESONDERE SCHRUMPFVORRICHTUNG, ZUM AUTOMATISIERTEN EIN- UND AUSSPANNEN EINES WERKZEUGS IN EINEN WERKZEUGHALTER**

(30) Priorität: 23.12.2024 DE 102024139625
(71) Anmelder: Haimer GmbH, 86568 Hollenbach-Igenhausen (DE)
(72) Erfinder: Haimer, Andreas, 86568 Hollenbach-Igenhausen (DE)

(57) **Zusammenfassung**

Die Erfindung betrifft ein Verfahren zur Kompensation von Messfehlern bei der Vermessung von Werkzeugen oder Werkstücken, insbesondere bei au-tomatisierten Prozessen, wie beispielsweise in einer Montagevorrichtung, insbesondere Schrumpfvorrichtung, zum au-tomatisierten Ein- und Ausspannen eines Werkzeugs in einen Werkzeughalter, eine Messvorrichtung zur Vermessung von Werkzeugen oder Werkstücken sowie eine Montagevorrichtung, insbesondere Schrumpfvorrichtung, zum au-tomatisierten Ein- und Ausspannen eines Werkzeugs in einen Werkzeughalter.

Um Messfehler bei der Vermessung von Werkzeugen oder Werkstücken zu vermeiden bzw. kompensieren, wird ein das Werkzeug bzw. das Werkstück auszeichnender Punkt am Werkzeug bzw. Werkstück, insbesondere ein bezüglich der Längsachse des Werkzeugs bzw. Werkstücks höchster Punkt des Werkzeugs bzw. Werkstücks, vermessen, wobei das Werkzeug bzw. Werkstück aus einer definierten Ausgangsdrehlage um einen vorgebbaren Drehwinkel um seine Längsachse gedreht wird. Dann wird ein Mittelwert, insbesondere ein arithmetisches Mittel, bei den Messwerten des vermessenen Messwerteverlaufs ermittelt und unter Verwendung des ermittelten Mittelwerts, insbesondere des ermittelten arithmetischen Mittels, wird ein fehlerkompensierter (Mess-)Wert für den das Werkzeug bzw. das Werkstück auszeichnenden Punkt ermittelt.

## Beschreibung

Die Erfindung betrifft ein Verfahren zur Kompensation von Messfehlern bei der Vermessung von Werkzeugen oder Werkstücken, insbesondere bei automatisierten Prozessen, wie beispielsweise in einer Montagevorrichtung, insbesondere Schrumpfvorrichtung, zum automatisierten Ein- und Ausspannen eines Werkzeugs in einen Werkzeughalter, eine Messvorrichtung zur Vermessung von Werkzeugen oder Werkstücken sowie eine Montagevorrichtung, insbesondere Schrumpfvorrichtung, zum automatisierten Ein- und Ausspannen eines Werkzeugs in einen Werkzeughalter.

Aus der DE 10 2024 122 028 A1 ist eine Schrumpfvorrichtung zum automatisierten Ein- und Ausschrumpfen eines Werkzeugs in einen Werkzeughalter mit einer Messvorrichtung zur Vermessung von Werkzeugen bekannt. Mit den Geräten der Baureihe "UNO" oder der Baureihe "VIO" der Fa. Haimer sind Voreinstellgeräte, d.h. Vorrichtungen zum Vermessen eines Werkzeugs oder eines Werkzeugs in einem Werkzeughalter (Komplett- /Gesamtwerkzeug), auch mit einer Messvorrichtung zur Vermessung von Werkzeugen bekannt.

### (Schrumpfvorrichtung/Zelle)

Es ist bekannt, Werkzeughalter, die einen Schaft eines Werkzeugs, insbesondere eines Rotationswerkzeugs, wie beispielsweise eines Bohrers, eines Fräsers oder eines Schleifwerkzeugs, in einem Presssitz in einer zentrischen Aufnahmeöffnung des Werkzeughalters halten, im Bereich dieser Aufnahmeöffnung durch Erwärmen aufzuweiten, um den Schaft des Werkzeugs einsetzen oder entnehmen zu können (thermisches Ein- bzw. Ausschrumpfen bzw. kurz nur Ein- bzw. Ausschrumpfen).

Üblicherweise werden dafür sogenannte Schrumpfgeräte - und für die Erwärmung des Werkzeughalters dortig verbaute Induktionsheizeinrichtungen genutzt, bei welchen mittels einer Induktionsspulenanordnung in dem Werkzeughalter transformatorisch Wirbelströme induziert werden.

In der nur wenige Sekunden dauernden Aufwärmphase wird der (sich im Schrumpfgerät befindliche) Werkzeughalter im Bereich der Aufnahmeöffnung auf mehrere 100°C erwärmt (, wobei dadurch der Bereich der Aufnahmeöffnung des Werkzeughalters aufgeweitet wird - und so der Schaft des Werkzeugs dort eingesetzt bzw. das Werkzeug entnommen werden kann).

Um die Abkühlphase des Werkzeughalters zu verkürzen (und ggfl. auch die Betriebssicherheit bei Schrumpfen zu erhöhen), wird dieser nachfolgend durch Anblasen mit einem Luftstrom oder mittels einer von Kühlmittel durchflossenen Kühlmanschette abgekühlt.

Durch fortschreitende Automatisierung industrieller Prozesse wurde in den vergangenen Jahren auch der Schrumpfprozess weitestgehend automatisiert, wobei hier nicht nur der eigentliche Schrumpfvorgang durch das Schrumpfgerät, wie dargestellt, automatisiert wurde, sondern auch - dem eigentlichen Schrumpfvorgang - vor- und nachgelagerte Prozesse, wie die Zuführung und die Abfuhr von Werkzeughalter und Werkzeug zum Schrumpfgerät oder auch die Kühlung (eines Werkzeughalters nach dem Schrumpfen), ein Wuchten und/oder ein Voreinstellen, - als integrativ notwendige Prozesse beim automatisierten Schrumpfen im Gesamtprozess einer industriellen automatisierten Fertigung.

D.h., mittels einer solchen automatisierten Schrumpfvorrichtung, welche oftmals bzw. üblicherweise auch nur automatisierte Schrumpfzelle genannt wird, bzw. der **Montagevorrichtung/Schrumpfvorrichtung zum automatisierten Ein- und Ausspannen/-schrumpfen eines Werkzeugs in einen Werkzeughalter** kann eine Bestückung eines Werkzeughalters mit einem Werkzeug bzw. ein Werkzeugwechsel bei einem Werkzeughalter nahezu ohne manuellen Eingriff automatisiert - im Gesamtprozess einer automatisierten Produktion von Werkstücken - durchgeführt werden.

Nochmals zu Klarstellung - **Schrumpfvorrichtung (zum automatisierten Ein- und Ausschrumpfen eines Werkzeugs in einen Werkzeughalter)** bzw. **(automatisierte) Schrumpfzelle** meint eine komplexe industrielle Anlage, welche so - als zwar - einen durchaus wesentlichen Bestandteil das Schrumpfgerät - zum (eigentlichen) Ein-/Ausschrumpfen von Werkzeugen in Werkzeughalter - aufweist, darüber hinaus aber eine Mehrzahl verschiedener anderer wichtiger Bestandteile, wie Handhabungsgräte bzw. Industrieroboter/-arme und/oder Fördereinrichtungen/-bänder, welche dem (eigentlichen) Schrumpfen im Schrumpfgerät vor- und nachgelagerte Prozesse bewerkstelligen - und so einen komplexen automatisierten (Gesamt-)Prozess - als integrativ notwendigen Prozess beim automatisierten Schrumpfen im Gesamtprozess einer industriellen automatisierten Fertigung ermöglichen.

Eine solche **Schrumpfvorrichtung zum automatisierten Ein- und Ausschrumpfen eines Werkzeugs in einen Werkzeughalter** bzw. **automatisierte Schrumpfzelle** ist aus der bereits erwähnten DE 10 2024 122 028 A1 bekannt.

### (Voreinstellung)

Weiterhin ist es üblich, gegebenenfalls wie beispielsweise automatisiert in einer solchen vorerwähnten **Schrumpfvorrichtung zum automatisierten Ein- und Ausschrumpfen eines Werkzeugs in einen Werkzeughalter** bzw. **automatisierte Schrumpfzelle** - oder auch unabhängig davon, ein Komplettwerkzeug aus einer Werkzeugaufnahme und einem in der Werkzeugaufnahme eingespannten, beispielsweise eingeschrumpften, Werkzeug, beispielsweise einem eingeschrumpften Fräs- oder eingespannten Schneidwerkzeug, vor der Kopplung mit einer, beispielsweise als CNC-Bearbeitungsmaschine ausgebildeten, Werkzeugmaschine mittels einer **Vorrichtung zum Vermessen eines Werkzeugs,** kurz auch nur **"Voreinstellgerät"** genannt, zu vermessen ("Voreinstellung").

Die so mit dem Voreinstellgerät ermittelten (geometrischen) Maße des Werkzeugs bzw. Komplettwerkzeugs werden dann zur Optimierung der Werkstückbearbeitung in der Werkzeugmaschine der Werkzeugmaschine zur Verfügung gestellt bzw. dort verwendet.

Durch die Voreinstellung wird insbesondere sichergestellt, dass ein Werkstück bearbeitende Teile des Werkzeugs, wie beispielsweise eine Schneidkante eines Schneid-/Fräswerkzeugs, die für die geplante Bearbeitung des Werkstücks auf der Werkzeugmaschine akzeptablen Positionsmaße haben. Vereinfacht und allgemein ausgedrückt, es erfolgt eine Überprüfung und Inspektion von Werkzeugen auf Maßhaltigkeit aller relevanten Maße und Merkmale.

Mittels eines solchen Voreinstellgeräts werden dabei insbesondere die Länge des Komplettwerkzeugs, der Durchmesser und/oder die Schneidenform des eingespannten Werkzeugs bzw. Schneid-/Fräswerkzeugs - und gegebenenfalls verschiedene weitere Abmessungen des bzw. bei dem Werkzeug bzw. Komplettwerkzeug gemessen.

Sind diese Daten unmittelbar für die Qualität der Werkstückbearbeitung des Werkstücks in der Werkzeugmaschine relevant, so hat die Werkzeugvermessung in dem Voreinstellgerät unter großer (Wiederhol-)Genauigkeit zu erfolgen.

Eine solche **Vermessungseinrichtung** bzw. ein solches **Voreinstellgerät** ist beispielsweise durch das bereits erwähnte Voreinstellgerät der Baureihe "UNO" oder der Baureihe "VIO" der Fa. Haimer bekannt.

### (Nachteil im Stand der Technik)

Sowohl bei der **Schrumpfvorrichtung zum automatisierten Ein- und Ausschrumpfen eines Werkzeugs in einen Werkzeughalter** bzw. **automatisierte Schrumpfzelle** als auch bei der **Vorrichtung zum Vermessen eines Werkzeugs oder eines Werkzeugs in einem Werkzeughalter (Komplettwerkzeug)** bzw. **Voreinstellgerät** sowie auch bei dortigen **Messvorrichtungen zum Vermessen von Werkzeugen,** hängt die Qualität/Genauigkeit des Prozesses/Ergebnisses maßgeblich von der Qualität und Genauigkeit der Vermessung des Werkzeuges (oder Komplettwerkzeuges) bzw. von dort zum Einsatz kommenden Messvorrichtungen/Kamerasystemen ab.

Messfehler und/oder Messungenauigkeiten bei der Vermessung können dazu führen, dass hergerichtete Gesamtwerkzeuge geforderte/angestrebte Toleranzen nicht aufweisen, was wiederum in Folge zu Ungenauigkeiten bei der Fertigung von Werkstücken (mittels solcher Gesamtwerkzeuge) führt.

### (Aufgabe der Erfindung)

Es ist Aufgabe der Erfindung, eine genaue und/oder möglichst fehlerfreie Vermessung von Objekten, wie Werkzeugen oder auch Werkstücken, insbesondere bei automatisierten Prozessen, wie beispielsweise in einer Schrumpfvorrichtung zum automatisierten Ein- und Ausschrumpfen eines Werkzeugs in einen Werkzeughalter und/oder in Vorrichtungen zum Vermessen eines Werkzeugs oder eines Werkzeugs in einem Werkzeughalter (Komplettwerkzeug) zur Verfügung zu stellen.

Diese Aufgabe wird gelöst durch ein **Verfahren zur Kompensation von Messfehlern bei der Vermessung von Werkzeugen oder Werkstücken,** insbesondere bei automatisierten Prozessen, wie beispielsweise in einer Montagevorrichtung, insbesondere Schrumpfvorrichtung, zum automatisierten Ein- und Ausspannen eines Werkzeugs in einen Werkzeughalter, eine **Messvorrichtung zur Vermessung von Werkzeugen oder Werkstücken** sowie eine **Montagevorrichtung, insbesondere Schrumpfvorrichtung, zum automatisierten Ein- und Ausspannen eines Werkzeugs in einen Werkzeughalter** - mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf das **Verfahren** wie auch auf die **Vorrichtungen.**

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Bei dem **Verfahren zur Kompensation von Messfehlern bei der Vermessung von Werkzeugen oder Werkstücken** wird ein das Werkzeug bzw. das Werkstück auszeichnender Punkt am Werkzeug bzw. Werkstück, insbesondere ein bezüglich der Längsachse des Werkzeugs bzw. Werkstücks höchster Punkt des Werkzeugs bzw. Werkstücks, vermessen. Hierbei wird das Werkzeug bzw. Werkstück aus einer definierten Ausgangsdrehlage um einen vorgebbaren Drehwinkel um seine Längsachse gedreht.

Weiter wird ein Mittelwert bei den Messwerten des vermessenen Messwerteverlaufs ermittelt. Der Mittelwert kann durch ein geeignetes mathematisches Verfahren bestimmt werden. Z. B. kann er das arithmetische Mittel, das geometrische Mittel oder der Median sein. Bevorzugt soll auf das arithmetische Mittel Bezug genommen werden, was aber andere Verfahren zur Mittelwertbildung nicht ausschließen soll.

Unter Verwendung des ermittelten Mittelwerts, insbesondere des arithmetischen Mittels, wird dann ein fehlerkompensierter Wert bzw. Messwert für den das Werkzeug bzw. das Werkstück auszeichnenden Punkt ermittelt.

Der fehlerkompensierte Wert bzw. Messwert kann beispielsweise ein Wert für den höchsten Punkt des Werkzeugs bzw. Werkstücks oder auch eine Drehposition für den höchsten Punkt des Werkzeugs bzw. Werkstücks sein.

Insbesondere kann der fehlerkompensierte (Mess-)Wert unter Verwendung von Messwerten, die ein vorgebbares Kriterium bezüglich des Mittelwerts, insbesondere des arithmetischen Mittels, erfüllen, ermittelt werden.

Die **Messvorrichtung zur Vermessung von Werkzeugen oder Werkstücken** sieht eine Messfehlerkompensationseinrichtung vor, welche eingerichtet ist zur Durchführung des **Verfahrens zur Kompensation von Messfehlern bei der Vermessung von Werkzeugen oder Werkstücken** (oder dessen Weiterbildungen).

Die Messvorrichtung kann darüber hinaus auch eine Messeinrichtung, insbesondere eine optische Messeinrichtung, besonders bevorzugt eine telezentrische Messeinrichtung, vorsehen.

Die **Montagevorrichtung,** insbesondere Schrumpfvorrichtung, zum automatisierten Ein- und Ausspannen eines Werkzeugs in einen Werkzeughalter sieht die **Messvorrichtung zur Vermessung von Werkzeugen oder Werkstücken** (oder deren Weiterbildungen) - und/oder - bei einer Vermessung des Werkzeugs bei einem in der Montagevorrichtung durchgeführten Prozess wird das **Verfahren zur Kompensation von Messfehlern bei der Vermessung von Werkzeugen oder Werkstücken** (oder dessen Weiterbildungen) durchgeführt.

Die **Vorrichtung** kann auch selbstkalibrierende Mechanismen umfassen, die automatisch eine Kalibrierung in regelmäßigen Abständen überprüfen und anpassen. Sie können die Messeinheit automatisch kalibrieren, indem sie bekannte Standardmaße verwenden, um Abweichungen zu erkennen und die Systeme entsprechend anzupassen. Dies könnte durch integrierte Kalibrierungsstandards oder Referenzwerkzeuge erreicht werden, die periodisch vermessen werden, um die Kalibrierung zu überprüfen und bei Bedarf Anpassungen vorzunehmen.

Auch kann die **Vorrichtung** mit einem energieeffizienten Betriebsmodus oder anderen energieeffizienten Technologien ausgestattet sein, was sowohl ökologische als auch ökonomische Vorteile bietet. Dies könnte durch den Einsatz von Energiesparmodi oder durch die Optimierung des Energieverbrauchs während der Messungen erreicht werden.

Darüber hinaus kann die **Vorrichtung** mit einer benutzerfreundlichen Schnittstelle und interaktiven Feedback-Mechanismen sowie Echtzeit-Feedback-Schleifen zur kontinuierlichen Anpassung der Messparameter ausgestattet sein. Dies kann durch visuelle Rückmeldungen, einfache Menüstrukturen und assistive Funktionen erreicht werden. Eine intuitive Benutzeroberfläche mit visuellen Dashboards, Echtzeit-Feedback und einfachen Konfigurationsmöglichkeiten kann dem Bedienern helfen, schnell auf Messdaten zuzugreifen, Berichte zu erstellen und Anpassungen vorzunehmen, wodurch die Effizienz des Systems maximiert wird.

Auch kann die **Vorrichtung** modular aufgebaut sein, um einfach an unterschiedliche Werkzeugtypen und -größen bzw. Werkstückgrößen angepasst werden zu können. Dies erhöht die Flexibilität und Anwendbarkeit der **Vorrichtung** in verschiedenen industriellen Kontexten. Implementiert werden kann auch ein System zur lückenlosen Nachverfolgung und Berichterstattung der Messdaten. Dies könnte die Erstellung von Berichten für Qualitätskontrollzwecke umfassen und sicherstellen, dass alle Messungen dokumentiert und bei Bedarf überprüfbar sind, was insbesondere in regulierten Industrien von Vorteil ist.

Auch kann bei der **Vorrichtung** eine cloudbasierte Datenanalyse und -speicherung zur kontinuierlichen Verbesserung des Messprozesses verwendet werden. Auch können diese Daten zur kontinuierlichen Verbesserung des Messprozesses und zur Unterstützung bei der Fehlerkompensation genutzt werden.

Die **Vorrichtung** kann ferner mit einem zentralen Datenanalyse- und Managementsystem vernetzt sein, das zur Optimierung des gesamten Produktionsprozesses beiträgt. Daten können gesammelt, analysiert und genutzt werden, um Muster zu erkennen und die Effizienz zu steigern. Durch Einsatz von Big-Data-Analysewerkzeugen können große Mengen an Messdaten analysiert werden, um Trends zu erkennen, die auf mögliche zukünftige Probleme oder Verbesserungsmöglichkeiten hinweisen. Diese Analysen könnten dann verwendet werden, um proaktiv Wartungsmaßnahmen zu planen oder Fertigungsprozesse zu optimieren.

Das **Verfahren** kann unter Verwendung von umweltkompensierenden Verfahren durchgeführt werden, die die Einflussfaktoren von Temperatur- und Feuchtigkeitsschwankungen minimieren. Dies ist besonders wichtig in Produktionsumgebungen, die nicht vollständig klimatisiert sind.

Die **Vorrichtung** kann - nahtlos - in bestehende CNC-Maschinen oder andere Fertigungssysteme integriert werden. Dies würde die Notwendigkeit für manuelle Übergaben reduzieren und die Effizienz der gesamten Prozesskette erhöhen, indem die Vermessung und Anpassung der Werkzeuge direkt in den Fertigungsprozess integriert wird.

Der Erfindung liegt die - insbesondere auch experimentell bestätigte - Erkenntnis zugrunde, dass bekannte Messeinrichtungen, insbesondere telezentrische Messeinrichtungen, bei der Vermessung von Werkzeugen und/oder Werkstücken - unter bestimmten Messbedingungen - fehlerhafte Messwerte liefern (systematisch fehlerhafte Messwerte). Untersuchungen haben dabei auch gezeigt, dass diese Fehler - wiederum unter genau diesen bestimmten Messbedingungen - reproduzierbar sind. Dieses lässt die Erfindung zur Erkenntnis kommen, dass es sich bei diesen Fehlern um systematische Fehler - und nicht um zufällige Fehler handelt.

Auf Basis dieser Erkenntnis entwickelt nun bzw. kann die Erfindung nun eine systematische Vorgehensweise entwickeln, welche genau an diesem systematischen Fehler ansetzt, diesen durch das erfindungsgemäße Vorgehen kompensiert - und so - in jedem Fall einer - zunächst fehlerbehafteten - Messung sicherstellt, dass dann die kompensierte Messung - um den systematischen Fehler "bereinigt" - entsprechend fehlerfrei höchste Genauigkeit gewährleistet.

Die Erfindung zeichnet sich weiter dadurch aus, dass sie universell (bei Messsystemen und automatisierten Prozessen/- anlagen (bei dortigen Vermessungen)) einsetzbar ist. Sie ist einfach, transparent - und gewährleistet so eine hohe Prozessgenauigkeit und Prozesssicherheit, beispielsweise so eingesetzt bei automatisierten Prozessen, wie beispielsweise in einer Montagevorrichtung bzw. Schrumpfvorrichtung zum automatisierten Ein- und Ausspannen/-schrumpfen eines Werkzeugs in einen Werkzeughalter.

Bevorzugt kann bei einer Weiterbildung vorgesehen sein, dass ein Bereich mit den meisten aufeinanderfolgenden Messwerten, die ein vorgebbares Kriterium bezüglich des Mittelwerts, insbesondere des arithmetischen Mittels, erfüllen, insbesondere die kleiner sind als der ermittelte Mittelwert bzw. das arithmetische Mittel, in dem Messwerteverlauf bestimmt wird.

Derjenige (Mess-)Wert, der an einer vorgebbaren Position, insbesondere in der Mitte, des bestimmten Bereichs liegt, kann dann als der fehlerkompensierte (Mess-)Wert für den das Werkzeug bzw. das Werkstück auszeichnenden Punkt ermittelt werden (erster fehlerkompensierter Messwert).

Weiter kann hier dann auch vorgesehen sein, dass für denjenigen Messwert, der in der Mitte des bestimmten Bereichs liegt, bzw. für den ersten fehlerkompensierten Messwert dessen zugehörige Drehposition (bei der Vermessung) bestimmt wird.

Diese Vorgehensweise beim ersten fehlerkompensierten Messwert ist insbesondere dann geeignet, wenn messsichere Drehpositionen zu bestimmen sind, beispielsweise bei Prozessen am Werkzeug mit definierter Drehlage bzw. Ausrichtung des Werkzeugs -, in welchen diese dort insbesondere dann gehalten, verfahren, versetzt und/oder anderweitig bearbeitet werden müssen. Ist so beispielsweise die Drehlage des ersten fehlerkompensierten Messwerts ermittelt, kann das Werkzeug bzw. Werkstück in diese Lage gedreht - und dort so gehalten und bearbeitet bzw. versetzt/verfahren werden.

Bevorzugt kann bei einer anderen bzw. alternativen Weiterbildung vorgesehen sein, dass aus denjenigen Messwerten, die bezüglich des Mittelwerts, insbesondere des arithmetischen Mittels, ein vorgebbares Kriterium erfüllen, insbesondere innerhalb eines vorgebbaren Wertebereichs um den Mittelwert, insbesondere um das arithmetische Mittel, liegen, ein weiterer Mittelwert, insbesondere ein weiteres arithmetisches Mittel, als der fehlerkompensierte Messwert für den das Werkzeug bzw. das Werkstück auszeichnenden Punkt (zweiter fehlerkompensierter Messwert) bestimmt wird.

Diese Vorgehensweise beim zweiten fehlerkompensierten Messwert ist insbesondere dann geeignet, wenn hohe (Genauigkeits- )Anforderungen an Messungen bzw. Messwerten zu stellen sind, beispielsweise bei Validierungen (von Geometriemaßen des Werkzeugs bzw. Werkstücks).

Weiter kann hier auch vorgesehen sein, dass der Wertebereich unsymmetrisch um den Mittelwert bzw. das arithmetische Mittel liegt. Beispielsweise kann ein erster größerer Teilbereich unterhalb des Mittelwertes bzw. arithmetischen Mittels liegen, ein zweiter kleinerer Teilbereich oberhalb. Die Größe des Wertebereichs mag insbesondere in Abhängigkeit zugelassener/geforderter Toleranzen festgelegt werden.

Zweckmäßig ist es, wenn der vorgebbare Drehwinkel, um den das Werkzeug bzw. Werkstück - bei der Vermessung - aus einer definierten Ausgangsdrehlage um seine Längsachse gedreht wird, aus einem Bereich zwischen 5° und 300° oder zwischen 45° und 270°, insbesondere aus einem Bereich zwischen 75° und 180°, besonders bevorzugt mit 90° gewählt wird. Genannte Unter- und Obergrenzen können auch anders miteinander kombiniert werden, so z.B. zwischen 5° und 180° oder 45° und 90°.

Weiterhin kann insbesondere auch vorgesehen werden, dass die Vermessung unter Verwendung eines telezentrischen Messverfahrens durchgeführt wird. Alternativ ausgedrückt - es kann vorgesehen sein, dass die Messvorrichtung eine telezentrische Messeinrichtung ist. Dabei kann auch eine Kombination aus optischen, akustischen und taktilen Sensoren (Mehrfachsensorik, Sensorfusion) zur Verbesserung der Messgenauigkeit eingesetzt werden. Der Einsatz von verschiedenen Sensortechnologien - optische, akustische und taktile Sensoren - bietet eine umfassendere Erfassung der Messobjekte. Optische Sensoren könnten etwa die Oberflächenbeschaffenheit analysieren, während akustische Sensoren Vibrationen messen, die auf strukturelle Anomalien hinweisen könnten. Taktile Sensoren könnten die physikalische Form und Größe genauer erfassen. Laserinterferometern zur hochpräzisen Messung von Werkzeugpositionen und Werkzeugbewegungen können integriert werden, um eine verbesserte Auflösung und Genauigkeit bei der Erfassung von Werkzeuggeometrien und Werkzeugbewegungen zu ermöglichen. Thermischen Sensoren zur Erfassung der Temperatur der Werkzeuge und der Umgebung können eingesetzt werden, deren Daten zur Kompensation von temperaturbedingten Messfehlern verwendet werden, um die Genauigkeit unter verschiedenen Umgebungsbedingungen zu gewährleisten.

Intelligente Steuerungssysteme können miteingesetzt werden, die in der Lage sind, selbstständig Entscheidungen zu treffen und Maßnahmen zur Fehlerkorrektur basierend auf Echtzeitdaten und vorangegangenen Analysen zu ergreifen. Gleiches gilt für Koordinatenmessmaschinen zur Durchführung von In-Prozess-Messungen. Diese Maschinen können präzise und detaillierte Geometrieinformationen liefern, die zur Verbesserung der Werkzeugvermessung und Werkzeugkalibrierung verwendet werden können.

Zweckmäßig kann es auch sein, dass Messwerte und/oder ein Messwerteverlauf geglättet, gefiltert und/oder durch ein anderes statistisches Verfahren bearbeitet werden/wird, einschließlich der Nutzung einer erweiterten Fehlererkennung (und/oder -kompensation) zur Identifikation systematischer und zufälliger Fehler. Diese können auch auf historischen Daten und Messanalysen basieren. Der Einsatz von statistischen Verfahren erhöht die Zuverlässigkeit der Messergebnisse und minimiert die Wahrscheinlichkeit, dass fehlerhafte Daten in den Produktionsprozess einfließen.

Auch können adaptive Algorithmen helfen, kontinuierlich Parameter des Messprozesses auf Basis von Echtzeitdaten anzupassen. Dies ermöglicht es, auf Veränderungen in der Umgebung oder im Werkzeug, wie Werkzeugverschleiß, oder im Material selbst zu reagieren und so konsistent präzise Ergebnisse zu liefern. KI-Algorithmen können eingesetzt werden, um Muster in den Messdaten zu erkennen und die Messverfahren entsprechend zu optimieren. Beispielsweise könnten neuronale Netze verwendet werden, um häufige Fehlerquellen zu identifizieren und automatisch Korrekturen vorzunehmen. Adaptive Algorithmen könnten die Messparameter dynamisch anpassen, basierend auf Materialänderungen oder Werkzeugverschleiß.

Weiterbildend kann vorgesehen sein, dass das **Verfahren** (oder dessen Weiterbildungen) bei einem automatisierten Prozess bei einer Bearbeitung eines Werkzeugs oder Werkstücks, insbesondere eines Bearbeitungsprozesses eines Werkzeugs in einer Montagevorrichtung, insbesondere einer Schrumpfvorrichtung, zum automatisierten Ein- und Ausspannen eines Werkzeugs in einen Werkzeughalter eingesetzt wird.

Auch bei anderen automatisierten Prozessen, wie die Werkstückbearbeitung auf Werkzeugmaschinen, kann sie eingesetzt werden. Insbesondere auch bei Voreinstellgeräten und/oder Wuchtgeräten kann es zweckmäßig sein, das **Verfahren** (oder dessen Weiterbildungen) einzusetzen.

Zweckmäßig erscheint es, wenn das Werkzeug bzw. Werkstück - bei einem weiteren Prozessschritt des automatischen Prozesses - in die (zu demjenigen, in der Mitte des bestimmten Bereichs liegenden Messwerts bzw. zu dem ersten fehlerkompensierten Messwert) zugehörige Drehposition gedreht oder in der zugehörigen Drehposition gehalten wird - und insbesondere so gehalten bearbeitet, beispielsweise montiert, insbesondere aus- /eingeschrumpft, wird.

Im Fall eines Montageprozesses, insbesondere Schrumpfprozesses, und/oder bei der **Montagevorrichtung,** insbesondere Schrumpfvorrichtung, kann das Werkzeug - so in dieser Drehposition gehalten - ein- und/oder ausgespannt bzw. insbesondere eingeschrumpft werden.

Die Erfindung bzw. das **Verfahren** (oder dessen Weiterbildungen) ist insbesondere auch geeignet, bei einem, insbesondere automatisierten, Montieren oder Voreinstellen des Werkzeugs oder bei einem Wuchten des Werkzeugs bzw. eines Gesamtwerkzeugs aus einem Werkzeughalter und einem in diesem Werkzeughalter gehaltenen Werkzeug - insbesondere dort bei Messungen am Werkzeug bzw. Gesamtwerkzeug - eingesetzt zu werden.

Insbesondere zweckmäßig ist es auch, wenn die Erfindung bzw. das **Verfahren** (oder dessen Weitebildungen) bei der Vermessung eines Fräswerkzeuges, insbesondere eines Fräswerkzeuges mit einer oder mehreren Stirnschneiden, eingesetzt wird. So haben Experimente gezeigt, dass gerade bei der Vermessung von Fräswerkzeugen beschrieben systematische Messfehler auftreten, was mit einer Lichtbrechung/-beugung bzw. einem optischen Phänomen an Schneiden bei einem solchen Fräswerkzeug zu tun haben könnte. Damit erreicht man insbesondere hier - mit der Erfindung - zuverlässige und hochgenaue Messungen gerade bei Fräswerkzeugen.

Dort, wo im Folgenden nur von einer **Schrumpfvorrichtung** die Rede ist, kann die Erfindung in analoger Weise auch auf andere (insbesondere automatisierte) (Montage-)Zellen (mit dortigen Messaufgaben) mit anderen Montage- bzw. Spannverfahren für Werkzeuge als das Schrumpfen angewandt werden, beispielsweise für Spannzangenaufnahmen, Hydrodehnspannfutter, Kraftspannfutter, Weldon-Aufnahmen oder Messerkopfaufnahmen.

Hierbei tritt anstelle dann des Schrumpfgeräts das entsprechende andere Gerät/Vorrichtung (oder ggfl. (mehrere) andere Geräte/Vorrichtungen (, insbesondere unterschiedlicher Spannverfahren), welches das andere Spannverfahren bei dem Werkzeug bewerkstelligt. Das bzw. die anderen - andere Spannverfahren bewerkstelligenden - Geräte/Vorrichtungen können auch zusammen mit dem Schrumpfgerät oder auch ohne dem Schrumpfgerät in der Zelle verwirklicht sein.

Insbesondere auch andere Vorrichtungsteile, die den eigentlichen Ein- oder Ausspannvorgang des Werkzeuges betreffen, können entsprechend angepasst sein.

Gegebenenfalls könnten so dann bei anderen Geräten für Spannzangenaufnahmen, Hydrodehnspannfutter, Weldon-Aufnahmen oder Messerkopfaufnahmen automatisiert dort durch entsprechende Handhabungseinheiten/-geräte Teile verschraubt bzw. montiert, beispielsweise Überwurfmuttern bei Spannzangen, oder Schrauben angezogen werden, beispielsweise Druckschrauben bei Hydrodehnspannfutter oder Spannschrauben bei Weldon-Aufnahmen. Die entsprechenden Schraubeinrichtungen können beispielsweise fest an der Vorrichtung montiert sein und die Spannfutter an die Schraubeinrichtung insbesondere mithilfe der ersten Handhabungsvorrichtung herangeführt werden. Umgekehrt ist es möglich, die Schraubeinrichtung mit insbesondere der ersten Handhabungsvorrichtung und zum Spannfutter zu bewegen. Im letzteren Fall kann die Schraubeinrichtung fest an einer Handhabungsvorrichtung montiert sein oder durch diese gegriffen werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

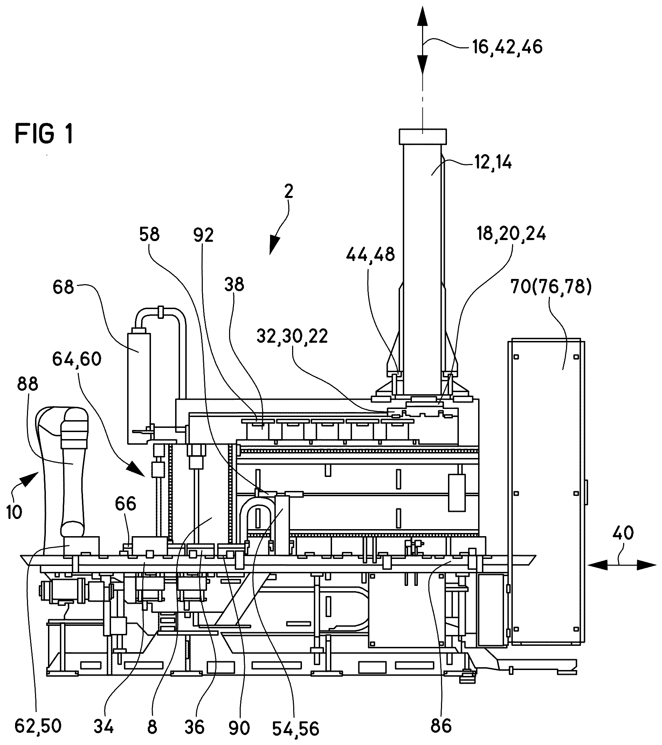

- FIG 1: eine Schrumpfvorrichtung zum automatisierten Ein- und Ausschrumpfen eines Werkzeugs in einen Werkzeughalter gemäß einer Ausführung in einer ersten Ansicht;

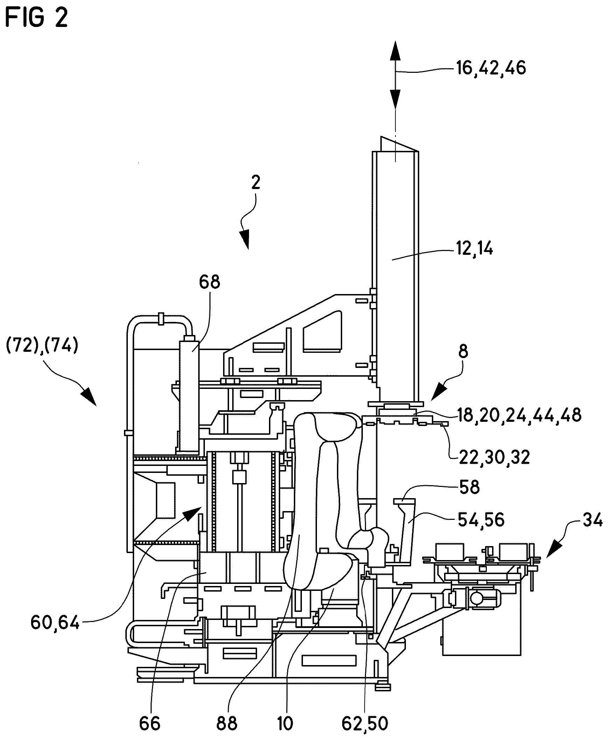

- FIG 2: die Schrumpfvorrichtung zum automatisierten Ein- und Ausschrumpfen eines Werkzeugs in einen Werkzeughalter gemäß der Ausführung in einer zweiten Ansicht;

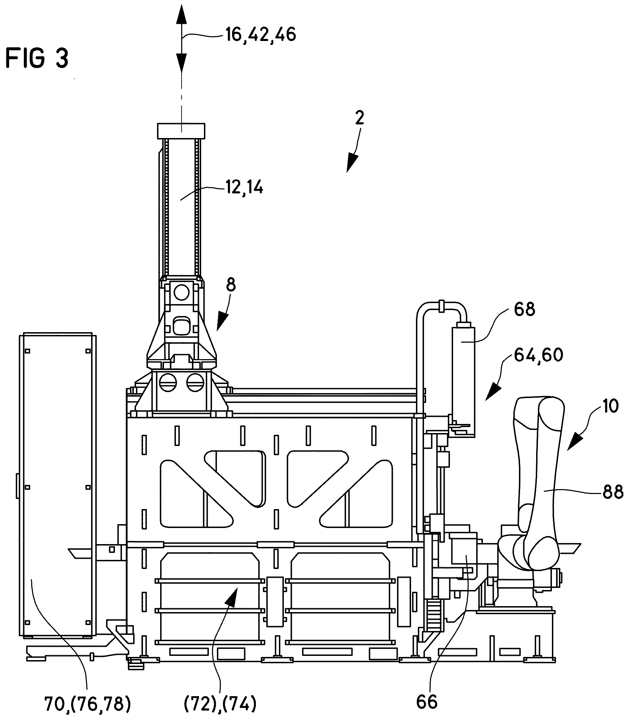

- FIG 3: die Schrumpfvorrichtung zum automatisierten Ein- und Ausschrumpfen eines Werkzeugs in einen Werkzeughalter gemäß der Ausführung in einer dritten Ansicht;
- FIG 4: die Schrumpfvorrichtung zum automatisierten Ein- und Ausschrumpfen eines Werkzeugs in einen Werkzeughalter gemäß der Ausführung in einer vierten Ansicht;

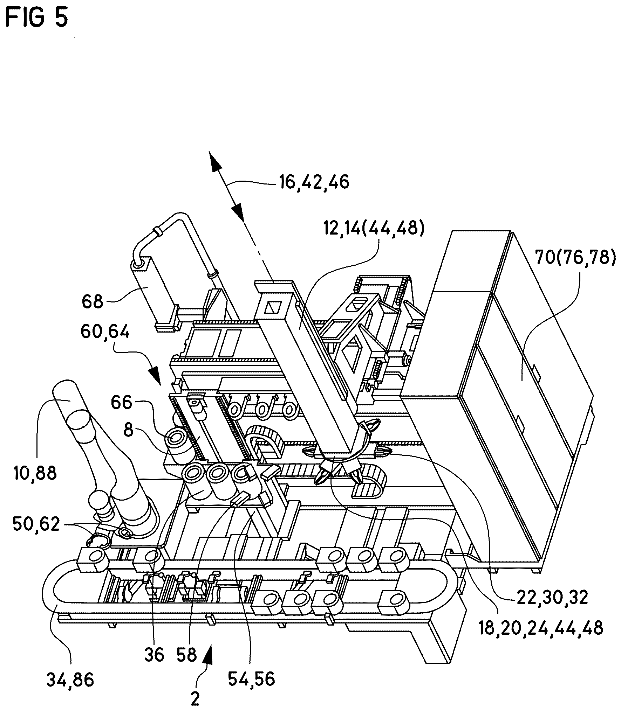

- FIG 5: die Schrumpfvorrichtung zum automatisierten Ein- und Ausschrumpfen eines Werkzeugs in einen Werkzeughalter gemäß der Ausführung in einer fünften Ansicht;

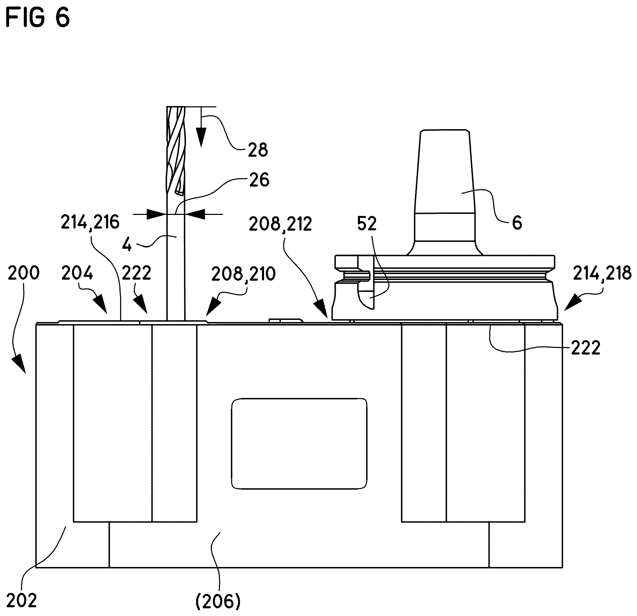

- FIG 6: die Förderbox zum Transport von Werkzeughalter und Werkzeugen gemäß der Ausführung in einer ersten Ansicht;

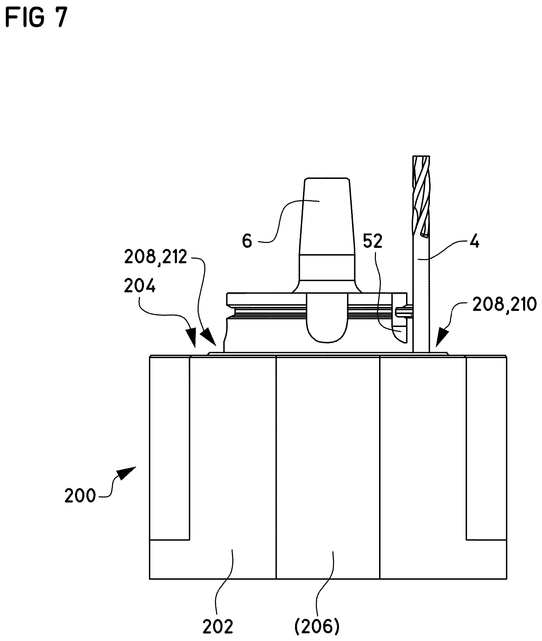

- FIG 7: die Förderbox zum Transport von Werkzeughalter und Werkzeugen gemäß der Ausführung in einer zweiten Ansicht;

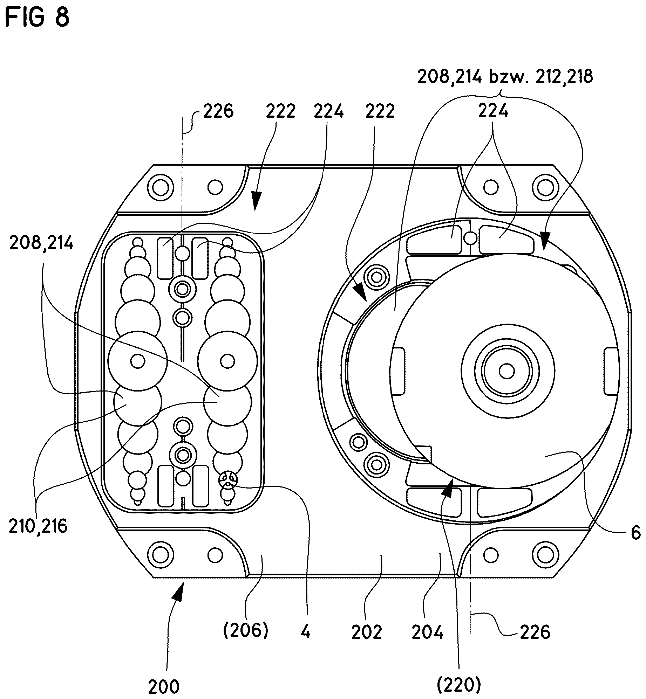

- FIG 8: eine Förderbox zum Transport von Werkzeughalter und Werkzeugen gemäß einer Ausführung in einer dritten Ansicht;

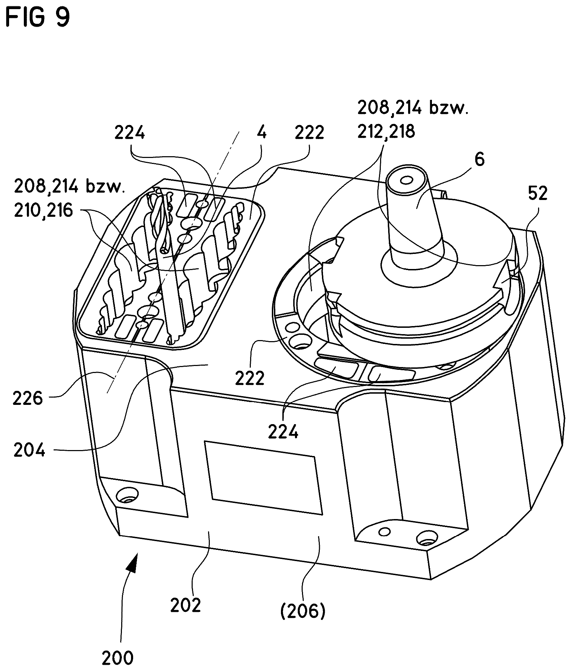

- FIG 9: die Förderbox zum Transport von Werkzeughalter und Werkzeugen gemäß der Ausführung in einer vierten Ansicht;
- FIG 10: einen Ausschnitt der Schrumpfvorrichtung zum automatisierten Ein- und Ausschrumpfen eines Werkzeugs in einen Werkzeughalter gemäß einer Ausführung bei einer Überprüfung eines Werkzeughalters (mit oder ohne Werkzeug);
- FIG 11: einen Ausschnitt der Schrumpfvorrichtung zum automatisierten Ein- und Ausschrumpfen eines Werkzeugs in einen Werkzeughalter gemäß einer Ausführung bei einer Überprüfung eines Werkzeughalters (mit oder ohne Werkzeug);
- FIG 12: einen Ausschnitt der Schrumpfvorrichtung zum automatisierten Ein- und Ausschrumpfen eines Werkzeugs in einen Werkzeughalter gemäß einer Ausführung bei einer Überprüfung eines Werkzeugs (, welches eingeschrumpft werden soll);
- FIG 13: einen Ausschnitt der Schrumpfvorrichtung zum automatisierten Ein- und Ausschrumpfen eines Werkzeugs in einen Werkzeughalter gemäß einer Ausführung bei einer Überprüfung eines Werkzeugs (, welches eingeschrumpft werden soll);
- FIG 14: einen Ausschnitt der Schrumpfvorrichtung zum automatisierten Ein- und Ausschrumpfen eines Werkzeugs in einen Werkzeughalter gemäß einer Ausführung bei einer Überprüfung beim Einschrumpfen bzw. Ausschrumpfen;

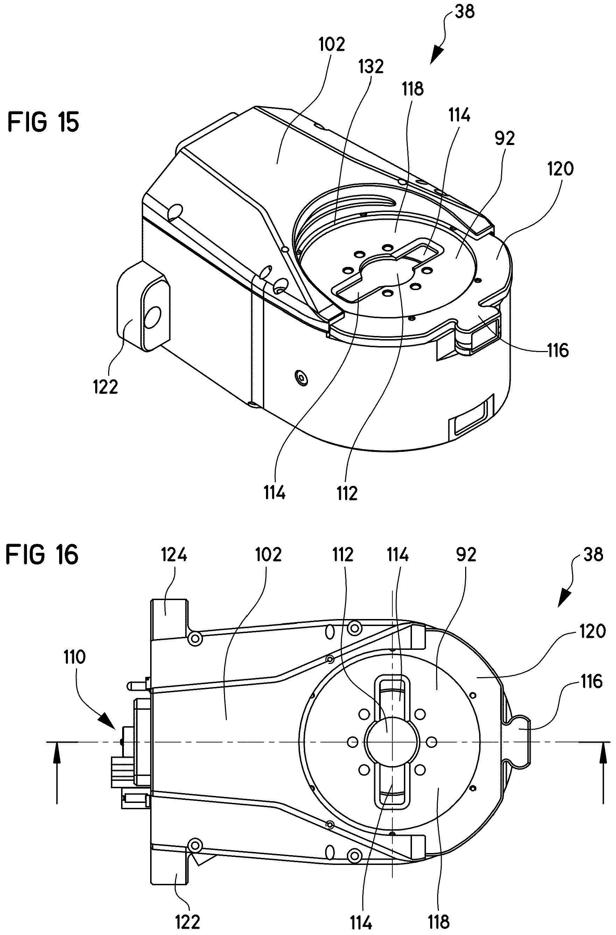

- FIG 15: eine Darstellung einer Induktionsspulenanordnung mit wechselbarer Anschlagscheibe bei der Schrumpfvorrichtung zum automatisierten Ein- und Ausschrumpfen gemäß einer Ausführung (perspektivisch);
- FIG 16: eine Darstellung einer Induktionsspulenanordnung mit wechselbarer Anschlagscheibe bei der Schrumpfvorrichtung zum automatisierten Ein- und Ausschrumpfen gemäß einer Ausführung (von oben);

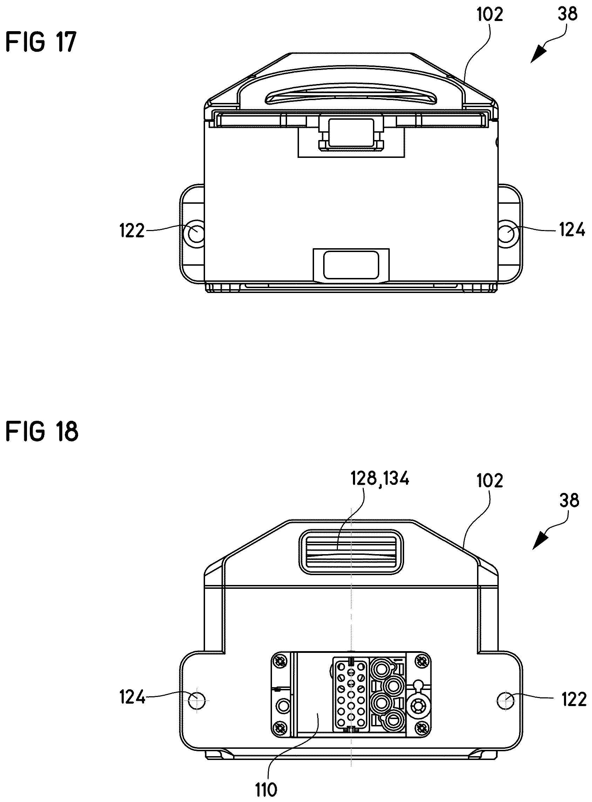

- FIG 17: eine Darstellung einer Induktionsspulenanordnung mit wechselbarer Anschlagscheibe bei der Schrumpfvorrichtung zum automatisierten Ein- und Ausschrumpfen gemäß einer Ausführung (von vorne);
- FIG 18: eine Darstellung einer Induktionsspulenanordnung mit wechselbarer Anschlagscheibe bei der Schrumpfvorrichtung zum automatisierten Ein- und Ausschrumpfen gemäß einer Ausführung (von hinten);

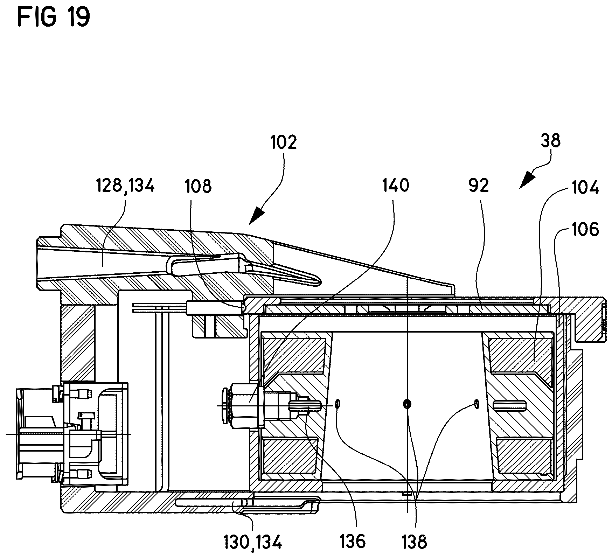

- FIG 19: eine Darstellung einer Induktionsspulenanordnung mit wechselbarer Anschlagscheibe bei der Schrumpfvorrichtung zum automatisierten Ein- und Ausschrumpfen gemäß einer Ausführung (im Schnitt);
- FIG 20: eine Schrumpfvorrichtung zum automatisierten Ein- und Ausschrumpfen eines Werkzeugs in einen Werkzeughalter mit einer Ultraschallreinigungsanlage (für Werkzeuge und/oder Werkzeughalter) gemäß einer Ausführung in einer Ansicht;
- FIG 21: ein erster Messwerteverlauf bei einer Vermessung eines Fräswerkzeugs, bei welchem eine ausführungsgemäße Messfehlerkompensation verdeutlicht ist;
- FIG 22: ein zweiter Messwerteverlauf bei einer Vermessung eines Fräswerkzeugs, bei welchem eine ausführungsgemäße Messfehlerkompensation verdeutlicht ist.

- **Messfehlerkompensation (für die Vermessung von Werkzeugen bzw. Gesamtwerkzeugen) (FIGen 21 und 22)**

### Korrekturverfahren 1

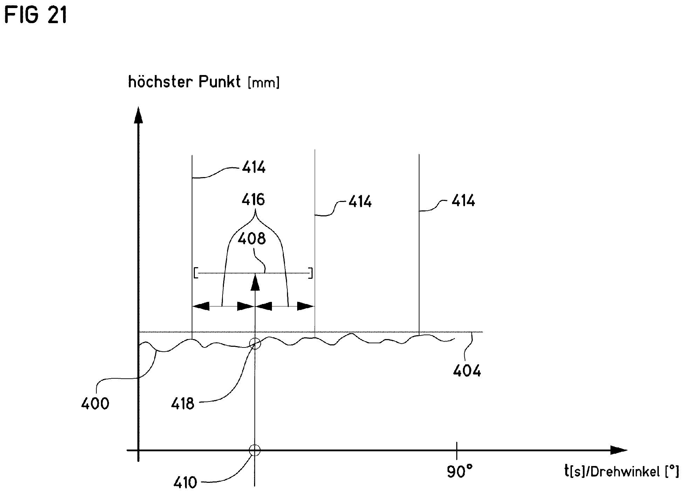

FIG 21 zeigt einen ersten Messwerteverlauf 400 bei einer Vermessung eines Fräswerkzeugs 4 bzw. dessen höchsten Punktes mittels eines optischen Messsystems, wobei das Fräswerkzeug 4 bei dieser Messung aus einer definierten Ausgangsdrehlage um einen vorgebbaren Drehwinkel, nämlich hier 90°, um seine Längsachse gedreht - und dabei vermessen - wurde (Abszisse/x-Koordinate: Messzeit t (bzw. Drehwinkel/-position des Fräswerkzeugs); Ordinate/y-Koordinate: Messwert für den höchsten Punkt des Fräswerkzeugs).

Wie der erste Messwerteverlauf 400 von FIG 21 - anhand der "Ausreißer" 414 im Messwerteverlauf 400 - erkennen lässt, ist dieser fehlerbehaftet, ist zu vermuten, dass es sich bei den "Ausreißern" 414 um fehlerhafte Messungen handelt. Geringfügige sonstigen Schwankungen im Messwerteverlauf mögen messtechnisch bedingt sein - und stellen keine Messfehler im eigentlichen Sinne dar.

Um nun einen Messwert für den höchsten Punkt des Fräswerkzeugs zu bestimmen, welcher den wahren Wert, d.h. die tatsächliche Höhe des Fräswerkzeugs am Genauesten wiedergibt, ist folgende Vorgehensweise (implementiert als mathematisches Verfahren im Messsystem) vorgesehen **(Korrekturverfahren 1):**
Wie FIG 21 verdeutlicht wird zunächst ein arithmetisches Mittel 404 (eingezeichnet in FIG 21) bei den Messwerten des vermessenen, ersten Messwerteverlaufs 400 ermittelt.

Weiter wird dann - im ersten Messwerteverlauf 400 - der Bereich 408 mit den meisten aufeinanderfolgenden Messwerten ermittelt, welche kleiner sind als das ermittelte arithmetische Mittel 404 (ebenfalls eingezeichnet in FIG 21).

Ferner wird dann der in der Mitte 416 des bestimmten Bereichs liegende Messwert bestimmt (auch eingezeichnet in FIG 21).

Dieser mittig liegende Messwert wird dann als fehlerkompensierter Messwert (erster fehlerkompensierter Messwert 418) für den höchsten Punkt des Fräswerkzeugs 4 genommen - und als tatsächliche Wert des höchsten Punktes vermutet.

Weiter wird dann hier - wie angedeutet in FIG 21 - die zu dem mittig liegenden Messwert bzw. ersten fehlerkompensierten Messwert 418 - zugehörige Drehposition 410 des Fräswerkzeugs 4 bestimmt.

### Korrekturverfahren 2

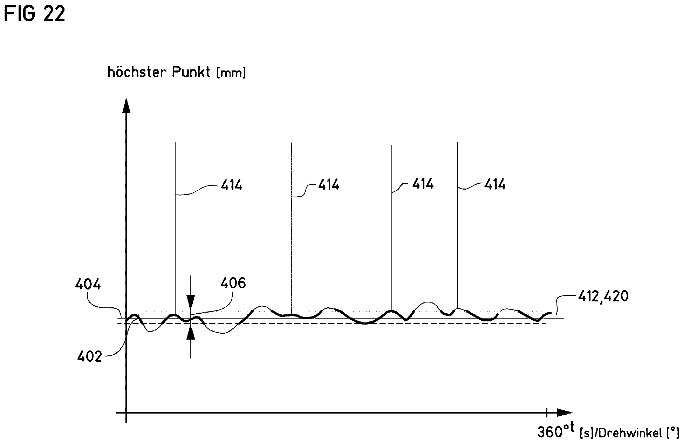

FIG 22 zeigt einen zweiten Messwerteverlauf 402 bei einer Vermessung eines Fräswerkzeugs 4 bzw. dessen höchsten Punktes mittels eines optischen Messsystems, wobei das Fräswerkzeug 4 bei dieser zweiten Messung aus einer definierten Ausgangsdrehlage um einen vorgebbaren Drehwinkel, nämlich hier jetzt 360°, um seine Längsachse gedreht - und dabei vermessen - wurde (Abszisse/x-Koordinate: Messzeit t (bzw. Drehwinkel/- position des Fräswerkzeugs); Ordinate/y-Koordinate: Messwert für den höchsten Punkt des Fräswerkzeugs)).

Wie der zweite Messwerteverlauf 402 von FIG 22 - anhand der "Ausreißer" 414 im zweiten Messwerteverlauf 402 - wiederum erkennen lässt, ist auch dieser fehlerbehaftet, ist zu vermuten, dass es sich bei den "Ausreißern" 414 um fehlerhafte Messungen handelt.

Um nun einen Messwert für den höchsten Punkt des Fräswerkzeugs 4 zu bestimmen, welcher den wahren Wert, d.h. die tatsächliche Höhe des Fräswerkzeugs am Genauesten wiedergibt, ist folgende Vorgehensweise (implementiert als mathematisches Verfahren im Messsystem) vorgesehen **(Korrekturverfahren 2):**
Wie FIG 22 verdeutlicht wird zunächst wieder das arithmetische Mittel 404 (eingezeichnet in FIG 22) bei den Messwerten des vermessenen, zweiten Messwerteverlaufs 402 ermittelt.

Weiter wird dann - im Verlauf 402 - für diejenigen Messwerte, die innerhalb eines vorgebbaren Wertebereichs 406 um das arithmetische Mittel 404 liegen, nämlich 0,003 mm größer bzw. 0,004 mm kleiner (markiert in FIG 22), ein weiteres arithmetisches Mittel 412 ermittelt (eingezeichnet in FIG 22).

Dieses weitere arithmetische Mittel 412 wird dann als fehlerkompensierter Messwert (zweiter fehlerkompensierter Messwert 420) für den höchsten Punkt des Fräswerkzeugs genommen - und als tatsächlicher Wert des höchsten Punktes vermutet.

Zuvor beschriebene zwei Verfahren zur Kompensation bzw. Korrektur von Messfehlern, nämlich das **Korrekturverfahren 1** und das **Korrekturverfahren 2,** sind vorgesehen für die nachfolgend beschriebene automatisierte Schrumpfzelle 2 bzw. Schrumpfvorrichtung 2 zum automatisierten Ein- und Ausschrumpfen eines Werkzeugs in einen Werkzeughalter - bzw. dortigen Messvorrichtungen bzw. Vermessungen von Werkzeugen (in den jeweiligen Messsystemen implementiert).

Wie nachfolgend beschrieben sieht die Schrumpfzelle 2 verschiedene Messungen des Werkzeugs 4 bzw. Gesamtwerkzeugs aus Werkzeughalter 6 und dort gehaltenem Werkzeug 4 vor, nämlich durch die Messvorrichtungen/-systeme 58, 94 (hier Vermessung des Werkzeugs vor dem Einschrumpfen bzw. beim Einschrumpfen) und die Messvorrichtung 60 (hier Vermessung des Werkzeugs bzw. des Gesamtwerkzeugs nach dem Abkühlen).

Dabei ist in den Messvorrichtungen/-systemen 58 und 94 das **Korrekturverfahren 1** implementiert, da dortige Messungen und (dortig implementiertes) **Korrekturverfahren 1** insbesondere darauf abzielen, eine Drehposition des Werkzeugs messsicher zu bestimmen, in welcher Drehposition das Werkzeug dann mit hoher Zuverlässigkeit und Genauigkeit vermessen werden kann. D.h., die hier durch das **Korrekturverfahren 1** ermittelte Drehposition stellt sicher, dass - in dieser Position (wieder) vermessen - kein "Ausreißer" auftreten bzw. (anders ausgedrückt) schließt aus, dass, wird das Werkzeug in dieser Position vermessen, es dort zu fehlerhaften Messungen kommt.

Hier wird dann das Werkzeug 4 nach der Messung und Korrekturverfahren 1 in die ermittelte Drehposition gedreht - und in dieser Position von einem Handhabungssystem 12/Greifersystem so gegriffen und - so gehalten - weiterversetzt.

In der Messvorrichtung 60 ist das **Korrekturverfahren 2** implementiert, da dortige Messung und (dortig implementiertes) **Korrekturverfahren 2** insbesondere darauf abzielt, Messwerte, wie den höchsten Punkt des Werkzeugs, mit höchster Zuverlässigkeit und Genauigkeit zu bestimmen.

Werden mit den erwähnten Messsystemen 58, 60, und 94 höchste Punkte am Werkzeug 4 vermessen, so führen die Messsysteme 58, 60 und 94 "ihre" **Korrekturverfahren 1 bzw. 2** durch - und korrigieren so die Messwerte für die höchsten Werkzeugpunkte.
- **Automatisierte Schrumpfzelle 2 bzw. Schrumpfvorrichtung 2 zum automatisierten Ein- und Ausschrumpfen eines Werkzeugs in einen Werkzeughalter (FIGen 1 bis 5 und FIGen 10 bis 14)**

FIGen 1 bis 5 zeigen - in verschiedenen Ansichten und Details - eine Schrumpfvorrichtung 2 zum automatisierten Ein- und Ausschrumpfen eines Werkzeugs 4 in einen Werkzeughalter 6 - kurz als automatisierte Schrumpfzelle 2 bzw. nur Schrumpfzelle 2 bezeichnet. FIGen 10 bis 14 zeigen - in Ausschnitten - Überprüfungen des Werkzeugs 4 bzw. des Werkzeughalters 6 in der Schrumpfvorrichtung 2.

### (A) Die Anlage/die Schrumpfzelle 2

Wie die FIGen 1 bis 5 zeigen, sieht die - kompakt bauende - Schrumpfzelle 2 als wesentliche Komponenten, ein Förderband 34, einen mehrachsigen Industrieroboter/Greiferarm 10, eine Zentrierstation 54, ein (induktives) Schrumpfgerät 8, eine Kühlstation 64 sowie Schaltschränke 70 und einen Steuerrechner 76 und auch eine Sicherheitsabschirmung 80 vor - , welche in der (in den FIGen 1 bis 5) dargestellten Form kompakt bauend angeordnet sind - und funktionell in einem integrativen Gesamtprozess einer Bestückung eines Werkzeughalters 6 mit Werkzeugen 4 (im Rahmen einer automatisierten industriellen Fertigung) zusammenwirken.

### Fördereinrichtung 34

Funktionell die Anlage bzw. die Schrumpfzelle 2 "eröffnender Bestandteil bzw. Komponente" ist eine Fördereinrichtung 34, welche, wie die FIGen 1 bis 5 erkennen lassen, als ein umlaufendes, segmentiertes, Förderband 34 ausgebildet ist.

Die einzelnen Segmente 86 des Förderbandes 34 sind dabei wiederum derart ausgebildet, dass sie jeweils mit einer Förderbox 200 (, welche ihrerseits wiederum mit Werkzeugen 4 und Werkzeughalter 6 bestückt werden kann) (s. nachfolgen zu FIGen 6 bis 9) bestückt werden kann.

### mehrachsiger Industrieroboter/Greiferarm 10

Weiterhin sieht, wie den FIGen 1 bis 5 entnehmbar ist, die Schrumpfzelle 2 einen Mehrachsen-Gelenkarmroboter 10 vor (erste mehrachsige Handhabungsvorrichtung 10), welcher seitlich dem Förderband 34 positioniert ist.

Der Gelenk-/Greiferarm 88 dieses Mehrachsen-Gelenkarmroboter 10 ist mit einem Doppelgreifer 62 ausgebildet - für ein Greifen eines Werkzeugs 4 (erster Greifer) einerseits und für ein Greifen eines Werkzeughalters 6 (zweiter Greifer) anderseits.

Die Position (s. FIGen 1 bis 5) des Mehrachsen-Gelenkarmroboters 10 sowie dessen Armgeometrie ist derart vorgesehen, dass die wesentlichen Bereiche der Schrumpfzelle 2 durch den Mehrachsen-Gelenkarmroboter 10 bzw. dessen Doppelgreifer 62 erreichbar sind.

### (induktives) Schrumpfgerät 8 mit Greiferturm 12

Das Schrumpfgerät 8, welches (geometrisch, wie auch funktionell) zentralen Bestandteil der Schrumpfzelle 2 bildet, weist, wie die FIGen 1 bis 5, zeigen verschiedene nebeneinander angeordnete (Spann-)Spindeln 36, kurz nur Spindeln 36, auf, mittels welchen Werkzeughalter 6 während des Schrumpfens gespannt in Position gehalten werden können. Die Spindeln 36 sind dabei auch um eine vertikale Achse - hier im Folgenden als Z-Achse 16 bezeichnet - rotierbar.

Die Spindeln 36 ihrerseits sind auf einem horizontal 40 sowie vertikal 42 (Z-Achse 16) verfahrbaren Stelltisch 90 angeordnet, wodurch sie in den genannten Richtungen verfahr- bzw. anhebbar werden.

Im Bereich des Doppelgreifers 62 ist bei der ersten Handhabungsvorrichtung 10 ferner eine Leseeinrichtung 50, in diesem Fall eine optische Leseeinrichtung 50, angeordnet, mittels welcher Markierungen 52 (vgl. FIGen 6, 7 und 9), wie insbesondere Werkzeughaltercodes 52, welche an einem Werkzeughalter 6 angebracht sein können, gelesen werden können -, insbesondere, wenn ein in einer der Spindeln 36 eingespannter Werkzeughalter 8, mittels der ihn spannenden Spindel 36 rotiert wird.

Weiterhin sieht das Schrumpfgerät 8 mehrere, ebenfalls nebeneinander angeordnete Induktionsspulenanordnungen 38 vor, welche in vorgegebenen vertikalen 42 Abstand (Z-Achsen 16 - Abstand) oberhalb der Spindeln 36 angeordnet sind - und welche auch bezüglich der genannten Z-Achse 16 ausgerichtet sind. Die Induktionsspulenanordnungen 38 weisen - soweit hier von Bedeutung - auch die üblichen Anschlagscheiben 92 (Konzentratoren/Ferrit-Scheiben) auf.

Wenn auch, wie hier dargestellt, die Induktionsspulenanordnungen 38 in fester Höhe angeordnet sind, so kann auch vorgesehen sein, diese vertikal - längs der der Z-Achse 16 - verschiebbar anzuordnen.

Die Verfahrbarkeit des die Spindeln 36 tragenden Stelltisches 90 ist derart gestaltet, dass - einerseits jede der Spindeln 36 in Verlängerung der Z-Achse 16 unterhalb einer jeden Induktionsspulenanordnung 38 verfahrbar ist - sowie andererseits jede Spindel 36 längs der Z-Achse 16 bis an jede Induktionsspulenanordnung 38 anhebbar ist.

Ferner sind hier auch Mittel 44, 48 vorgesehen, mittels welchen der vertikale 42 Anhebeweg 46 der Spindeln 36 sowie eine Kollision mit den Induktionsspulenanordnungen 38, insbesondere mit den Anschlagscheiben 92 der Induktionsspulenanordnung 38 überwachbar ist.

Darüber hinaus sind bei dem Schrumpfgerät 2 die erwähnten mehreren Spindeln 36 und Induktionsspulenanordnungen 38 verbaut - in diesem gezeigten Fall drei Spindeln 36 und fünf Induktionsspulenanordnungen 38, um so auch, weisen diese Mehrzahl von Spindeln 36 und Induktionsspulenanordnungen 38 unterschiedliche geometrische Abmessungen auf, eine Gesamtpalette von Werkzeugen 4 und Werkzeughalter 8 schrumpfen zu können.

Weiterhin sieht, wie die FIGen 1 bis 5 erkennen lassen, das Schrumpfgerät 2 eine - mittels eines linearen Antriebs 14 längs der Z-Achse 16 - automatisch verfahrbare Handhabungsvorrichtung 12 (zweite, automatisch verfahrbare Handhabungsvorrichtung 12) - hier kurz im Folgenden nur Greiferturm 12 genannt - vor.

Der Greiferturm 12 ist - ungeachtet seiner linearen Verfahrbarkeit längs der Z-Achse 16 und unabhängig davon - auch selbst - in vorgebbaren Umfang - automatisch horizontal 40 verfahrbar.

Der Greiferturm 12 sieht, wie die FIGen 1 bis 5 zeigen, einen um die Z-Achse 16 drehbaren Greiferkopf 18 vor. Die Drehposition des Greiferkopfes 18 kann mittels einer Winkelmessvorrichtung 20 bestimmt und somit dessen Positionierung überwacht werden.

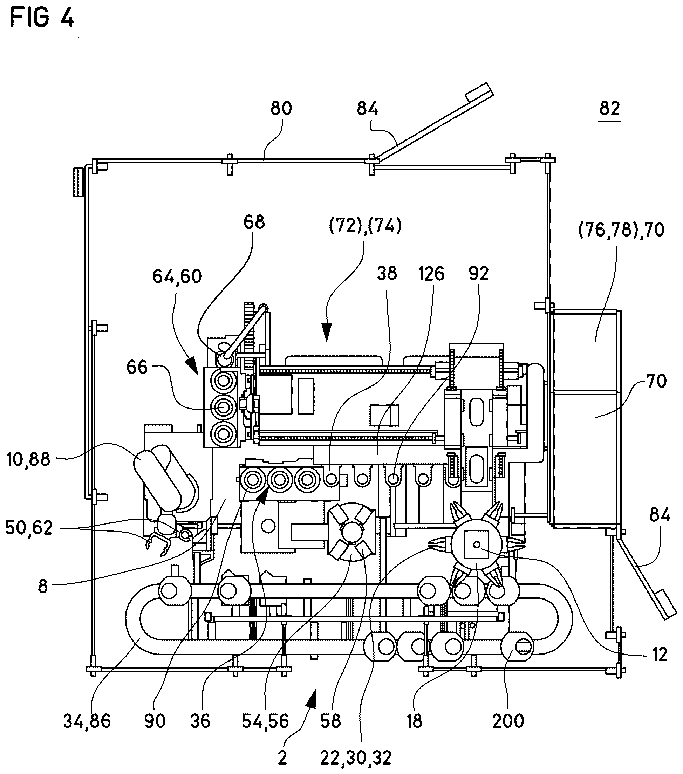

Der Greiferkopf 18 seinerseits weist mehrere Greifervorrichtungen 22 (Zangengreifer 22) zum Greifen von Werkzeugen 4 auf. Wie insbesondere FIG 4 erkennen lässt, sind die mehreren Greifervorrichtungen 22, in diesem Fall sechs, gleichverteilt um die Z-Achse 16 am Greiferkopf 18 angeordnet.

Darüber hinaus ist der Greiferkopf 18 mit Kraftmesseinrichtungen 24 ausgestattet, unter Verwendung derer eine Zug- und/oder Schubkraft des Greiferkopfes 18 bzw. der Greifervorrichtung 22 auf ein Werkzeug 4 messbar ist, um so ein Einführen eines Werkzeugs 4 in einen Werkzeughalter 6 bzw. ein Ausziehen eines Werkzeugs 4 aus einem Werkzeughalter 6 überwachen zu können (hier verfährt der Greiferturm 12 bzw. der Greiferkopf 18 längs der Z-Achse 16).

Weiterhin ist eine solche (bzw. jede) Greifervorrichtung 22 mit zwei beim Greifvorgang relativ zueinander bewegbaren, elektromotorisch verfahrbaren, Greiferbacken 30 ausgestattet. Die elektromotorische Verstellung der Greiferbacken 30 ermöglicht dabei, dass ein Greifvorgang, insbesondere hinsichtlich einer Greifkraft, mess- und überwachbar ist.

Jede Greiferbacke 30 sieht eine Anschlagnase 32 vor, welche als Anlageelement bei einer Positionierung (längs der Z-Achse 16) dienen kann. Die Greiferbacken 30 ihrerseits sind auch auswechselbar - und positionsgenau klemmbar bei der Greifvorrichtung 22 angeordnet.

Um eine gesamte Palette verschieden dimensionierter Werkzeuge 4 greifen zu können, sind die Greifervorrichtungen 22 an Werkzeugen 4 vorgebbaren Durchmesser 26 angepasst.

### Zentrierstation 54 mit Ausrichtungskontrolle bzw. Ausrichtungskontrolleinrichtung 58 (Messsystem 58)

Wie auch die FIGen 1 bis 5 zeigen, sieht die Schrumpfzelle 2 eine - im Bereich zwischen der Fördereinrichtung 34 und dem Schrumpfgerät 8 angeordnete - Zentrierstation 54 - zu einem Spannen und (Aus-)Richten eines Werkzeuges 4 - vor.

Die Zentrierstation 54 weist - in diesem hier gezeigten Fall - drei symmetrisch angeordnete Spannbacken 56 auf, mittels welchen ein Werkzeug 4 zentriert (und) gespannt gehalten werden kann.

Darüber hinaus ist an der Zentrierstation 54 - oberhalb der Spannbacken 56 - eine Ausrichtungskontrolleinrichtung 58, beispielsweise in Form eines optischen Messsystems 58 -, in welches das **Korrekturverfahren** 1 implementiert ist, vorgesehen, unter Verwendung deren eine Ausrichtung insbesondere in Bezug auf die Z-Achse 16) eines, aus der Zentrierstation 54 mittels des Greiferturms 12 entnommenen, Werkzeugs 4 bestimmbar und überwachbar ist.

Mittels dieser Ausrichtungskontrolleinrichtung 58 bzw. des Messsystems 58 soll es auch möglich sein, die Geometrie eines Werkzeugs 4 zu vermessen.

### Kühlstation 64

Links seitlich neben dem Schrumpfgerät 8 befindet sich bei der Schrumpfzelle 2 eine Kühlstation 64 zur Kühlung durch das Schrumpfen erwärmter, Werkzeughalter 6, wie sie im Wesentlichen in der Offenlegungsschrift zur Anmeldung mit dem amtl. Aktenzeichen DE 10 2022 114 046.6 beschrieben sein wird.

Die Kühlstation 64 - wie hier gemäß den FIGen 1 bis 5 verbaut - weist - ähnlich dem Schrumpfgerät 8 - mehrere nebeneinander angeordnete (Spann-)Spindeln 66, kurz auch nur Spindeln 66, auf, hier in diesem Fall drei Spindeln 66, unter Verwendung deren Werkzeughalter 6 beim Kühlen gespannt gehalten (und gegebenenfalls bei Bedarf rotiert) werden können.

Darüber hinaus sieht die Kühlstation 64 einen Kühlaufsatz 68 vor, welcher über an den Spindeln 66 gehaltene Werkzeughalter 6 überstülpbar ist und welcher eingerichtet ist zur Erzeugung einer Wirbelstromkühlung (Zyklonkühlung).

Ein solcher Kühlaufsatz 68 ist beispielsweise in der erwähnten Offenlegungsschrift zur Anmeldung mit dem amtl. Aktenzeichen DE 10 2022 114 046.6 beschrieben.

### Wuchtvorrichtung 72 und Voreinstelleinrichtung 74

Im Rücken des Schrumpfgerätes 8 können weiter dann auch noch eine Wuchtvorrichtung 72 sowie gegebenenfalls auch eine Voreinstelleinrichtung 74 angeordnet sein (nicht dargestellt).

Die Wuchtvorrichtung 72 und die Voreinstelleinrichtung 74 können der Einfachheit halber wie üblich (aus dem Stand der Technik bekannt) ausgebildet sein.

Hierdurch wäre es möglich "frisch geschrumpfte" Werkzeughalter 6 (auch "gleich") zu wuchten und zu vermessen. Dortig vorsehbare Messsysteme können dann auch mit der Fehlerkorrektur ausgestattet sein. D.h., in diesen Messsystemen ist das Korrekturverfahren 1 bzw. 2 implementiert - und korrigiert - im Falle einer Vermessung des höchsten Punktes entsprechend diese Werte.

### Schaltschränke 70 und Steuerrechner 76

Rechts seitlich neben dem Schrumpfgerät 8 befindet sich bei der Schrumpfzelle 2, wie FIGen 1 bis 5 zeigen, Schaltschränke 70 und ein Steuerrechner 76 (mit Bildschirm, Eingabemittel und Drucker) (nicht sichtbar), in welchem die (Steuer- )Elektronik/-elektrik (soweit nicht unmittelbar in den Bestandteilen/Komponenten verbaut) bzw. die Steuerung 78 (Software 78) für die Schrumpfzelle 2 aufgenommenen bzw. gespeichert sind.

Über den Steuerrechner 76 kann die Schrumpfzelle 2 bedient bzw. gesteuert werden.

### Sicherheitsabschirmung 80/Sicherheitszaun 80

Zum Schutz der Schrumpfzelle 2 sieht diese eine Sicherheitsabschirmung 80 - hier in Form eines Sicherheitszaunes 80, vor, mittels welcher weite Bereiche der Schrumpfzelle 2 gegenüber einer Umgebung 82 um die Schrumpfzelle 2 (herum) abschirmbar sind.

Wie insbesondere FIG 4 zeigt, weist diese Sicherheitsabschirmung 80 bzw. dieser Sicherheitszaun 80 zwei (gegebenenfalls automatisch ver-/entriegelbare) Türen 84 auf, durch welche Bereiche an der Schrumpfzelle 2 betretbar werden.

Auch lässt die Sicherheitsabschirmung 80 bzw. der Sicherheitszaun 80 einen "mittleren" Bereich des Förderbandes 34 unabgeschirmt, so dass hier eine Bestückung des Förderbandes 34 (manuell, wie auch automatisiert), beispielsweise mit den Förderboxen 200 (s. nachfolgend), möglich ist.

Alle Komponenten der Schrumpfzelle 2 sind untereinander mittels einer (nicht näher dargestellten) Verkabelung verbunden, sodass Daten, wie beispielsweise Steuerbefehle wie auch Geometriedaten (von Werkzeugen 4 und Werkzeughaltern 6) dorthin übertragen werden können bzw. dort vorliegen können.

### (B) Der Prozess

Beim automatisierten Ein- bzw. Ausschrumpfen von Werkzeugen 4 in Werkzeughaltern 6 in vorbeschriebener Schrumpfzelle 2 läuft nach Folgendem Prozess ab:
(a) Bestückung einer auf der Fördereinrichtung 34 angeordneten Förderbox 200 mit einem (einzuschrumpfenden) Werkzeug 4 und einem Werkzeughalter 6 (insbesondere lageorientiert) mit einem (auszuschrumpfenden) Werkzeug 4,
(b) Transport der mit dem (einzuschrumpfenden) Werkzeug 4 und dem Werkzeughalter 6 mit dem (auszuschrumpfenden) Werkzeug 4 bestückten Förderbox 200 mittels der Fördereinrichtung 34 zu dem Schrumpfgerät 8 bzw. dort in eine Nähe einer der (Spann- )Spindeln 36 des Schrumpfgeräts 8,
(c) Versetzen des Werkzeughalter 6 mit dem (auszuschrumpfenden) Werkzeug 4 (kurz im Folgenden der Einfachheit halber immer nur Werkzeughalter 6) von der Förderbox 200 auf die bzw. eine der Spindeln 36 des Schrumpfgeräts 8 unter Verwendung des Mehrachsen-Gelenkarmroboters 10,
(d) Spannen des Werkzeughalters 6 auf der Spindel 36 des Schrumpfgeräts 8,
(e) Rotieren des auf der Spindel 36 des Schrumpfgerätes 8 gespannten Werkzeughalters 6 um die Z-achse 16 und Lesen einer auf dem Werkzeughalter 6 angebrachten Markierung 52 bzw. Werkzeughaltercodes 52 mittels der Leseeinrichtung 50,
(f) Bereitstellen von Werkzeughalter-, Werkzeug- und Schrumpfdaten bzw. -parameter, insbesondere unter Verwendung der auf dem Werkzeughalter 6 angebrachten und gelesenen Markierung 52 bzw. Werkzeughaltercodes 52,
(g) Versetzen des (einzuschrumpfenden) Werkzeuges 4 von der Förderbox 200 in die Zentrierstation 54 mittels des Mehrachsen-Gelenkarmroboters 10,
(h) Spannen und Ausrichten des (einzuschrumpfenden) Werkzeugs 4 in der Zentrierstation 54,
(i) Greifen des in der Zentrierstation 54 gespannten (einzuschrumpfenden) Werkzeugs 4 mittels des Greiferturms 12 bzw. dortiger Greifervorrichtung 22 (Zangengreifers 22) derart, dass das (einzuschrumpfende) Werkzeug 4 nach dem Einschrumpfen in den Werkzeughalter 6 eine vorgebbare Position in dem Werkzeughalter 6 aufweist,
(j) Vermessen des durch den Greiferturm 12 gegriffenen (einzuschrumpfenden) Werkzeugs 4 mittels des Messsystems 58 (vgl. **Korrekturverfahren** 1) und Vermessen der Ausrichtung des (einzuschrumpfenden) Werkzeugs 4 hinsichtlich der Z-Achse 16 - sowie auch gegebenenfalls dessen Geometrie (beispielsweise Länge bzw. höchsten Punktes),
(k) Verfahren des auf der Spindel 36 des Schrumpfgerätes 8 gespannten Werkzeughalters 6 - bis in Verlängerung der Z-Achse 16 unterhalb der (für das aktuelle Schrumpfen vorgesehenen) Induktionsspulenanordnung 38 des Schrumpfgeräts 8,
(l) Ermitteln des Anhebewegs 46 des auf der Spindel 36 des Schrumpfgerätes 8 gespannten Werkzeughalters 6 längs der Z-Achse 16 - gegebenenfalls auch unter Verwendung der Geometrie des Werkzeughalters 6,
(m) Anheben des auf der Spindel 36 des Schrumpfgerätes 8 gespannten Werkzeughalters 6 längs der Z-Achse 16 bis der Werkzeughalter 6 an der Anschlagscheibe 92 der Induktionsspulenanordnung 38 anschlägt,
(n) (dabei) Überwachung des Anhebevorgangs 46 des auf der Spindel 36 des Schrumpfgerätes 8 gespannten Werkzeughalters 6 hinsichtlich des Anhebewegs 46 (vgl. Hebewegüberwachungseinrichtung 44) und einer Kollision mit der Induktionsspulenanordnung 38 bzw. mit Anschlagscheiben 92 der Induktionsspulenanordnung 38 (vgl. Kollisionsüberwachungsvorrichtung 48),
   (Ausschrumpfen des "alten/verbrauchten" Werkzeugs 4 aus dem Werkzeughalter 6 und Einschrumpfen eines neuen Werkzeugs 4 in den Werkzeughalter 6)
(o) Erwärmen des Werkzeughalters 6 unter Verwendung der Induktionsspulenanordnung 38 des Schrumpfgeräts 8,
(p) Greifen des in dem Werkzeughalter 6 angeordneten (auszuschrumpfenden) Werkzeugs 4 durch den Greiferturm 12 bzw. Greifervorrichtung 22 (Zangengreifer 22) und Verfahren des durch den Greiferturm 12 bzw. dessen Greifervorrichtung/Zangengreifer 22 gegriffenen (auszuschrumpfenden) Werkzeugs 4 längs der Z-Achse 16 aus dem Werkzeughalter 6 - mit Überwachung des Verfahrens des gegriffenen Werkzeugs 4 hinsichtlich einer Zugkraft auf das (auszuschrumpfende) Werkzeug (vgl. Kraftmesseinrichtung 24),
(q) Schwenken bzw. Drehen/Rotieren des Greiferkopfes des Greiferturms (vgl. Winkelmessvorrichtung 20);
(r) Verfahren (insbesondere lageorientiertes, Einsetzen) des durch den Greiferturm 12 gegriffenen (einzuschrumpfenden) Werkzeugs 4 entlang der Z-Achse 16 relativ zu dem Werkzeughalter 6 in eine vorgebbare Schrumpfposition bezüglich des Werkzeughalters 6 solange bis die Anschlagnasen 32 der Greifervorrichtung 22 des Greiferkopfes 18 auf die obere Stirnseite des Werkzeughalters 6 (oder auf die Anschlagscheibe 92 der Induktionsspulenanordnung 38) aufliegen, mit Überwachung des Verfahrens des gegriffenen Werkzeugs 4 hinsichtlich einer Schubkraft auf das (einzuschrumpfende) Werkzeug (vgl. Kraftmesseinrichtung 24)
(s) kurzzeitiges Halten des (in den Werkzeughalter 6 einzuschrumpfenden) Werkzeugs 4 mittels des Greiferturms 12 zumindest solange bis durch Abkühlen des Werkzeughalters 6 das (einzuschrumpfende) Werkzeug 4 gespannt wird,
(t) Absenken des auf der Spindel 36 des Schrumpfgerätes 8 gespannten (, das gerade neu eingeschrumpfte Werkzeug 4 spannenden) Werkzeughalters 6 längs der Z-Achse 16,
(u) Versetzen des auf der Spindel 36 des Schrumpfgerätes 8 gespannten (, das gerade neu eingeschrumpfte Werkzeug 4 spannenden) Werkzeughalters 6 unter Verwendung des Mehrachsen-Gelenkarmroboters 10 in die Kühlstation 64 - und Spannen des Werkzeughalters 6 dort auf einer der Spindeln 66,
(v) Kühlen des (das gerade neu eingeschrumpfte Werkzeug 4 spannenden) Werkzeughalters 6 unter Verwendung der Wirbelstromkühlung (Zyklonkühlung) des Kühlaufsatzes 68,
(w) Vermessen des (das gerade neu eingeschrumpfte Werkzeug 4 spannenden) Werkzeughalters 6 in der Kühlstation (vgl. Messvorrichtung 60; in dieser Messvorrichtung 60 ist das **Korrekturverfahren** 2 implementiert),
(x) Verfahren des (gerade ausgeschrumpften) Werkzeugs 4 mittels des Greiferturms 12 zu der Förderbox 200 und Bestücken der Förderbox 200 mit diesem oder Verfahren des (gerade ausgeschrumpften) Werkzeugs 4 mittels des Greiferturms 12 zu der Zentrierstation 54 (und ggfl. Versetzen des Werkzeugs 4 von dort aus in die Förderbox 200),
(y) Versetzen des (gekühlten) Werkzeughalters 6 in die Förderbox 200 mittels des Mehrachsen-Gelenkarmroboters 10,
(z) Abtransportieren der bestückten Förderbox 200 mittels dem Förderband 34.

### - Überprüfungen des Werkzeugs 4 bzw. des Werkzeughalters 6 in der Schrumpfvorrichtung 2 (FIGen 10 bis 14)

Für diese Überprüfungen sieht die Schrumpfvorrichtung 2, wie die FIGen 10 bis 14 zeigen, ein hochgenaues Messsystem 94, hier ein Durchlichtmesssystem 94, vor, welches längs der Z-Achse sowie auch quer dazu in der Schrumpfvorrichtung 2 verfahrbar ist. In dieses Messsystem in das **Korrekturverfahren 1** implementiert.

Weiterhin weist die Schrumpfvorrichtung, wie die FIGen 12 bis 13 zeigen, - neben den vorbeschriebenen Spindeln 36 - ein drehbares Backenfutter 96 auf, welches (ebenfalls) vorgesehen ist, um Werkzeuge (hier bei deren Überprüfung) zu spannen (vgl. FIGen 12 und 13) - und welches Backenfutter 96 ebenfalls quer zur Z-Achse verfahrbar ist.

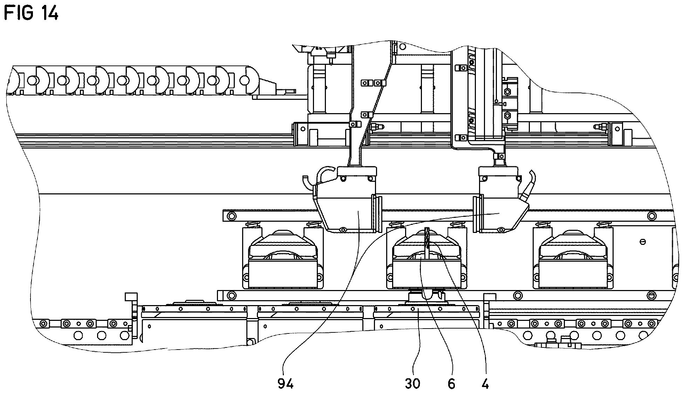

Durch das Messsystem 94 werden drei wichtige Überprüfungen/Validierungen an der Werkzeugaufnahme 6 bzw. am Werkzeug 4 durchgeführt:
(1) Überprüfung und Validierung eines Werkzeughalters 6 (mit oder ohne Werkzeuge 4, in welches das Werkzeug 4 eingeschrumpft werden soll) (FIGen 10 und 11),
(2) Überprüfung und Validierung eines Werkzeugs 4, welches eingeschrumpft werden soll (FIGen 12 und 13),
(3) Überprüfung und (simultane) Korrektur beim Einschrumpfen sowie beim Ausschrumpfen des Werkzeugs 4 (FIG 14).

Durch die Integration des Messsystems 94 (vgl. **Korrekturverfahren 1)** in die Schrumpfvorrichtung und in den automatisierten Werkzeugwechsel bei der Schrumpfvorrichtung 2 kann die Prozess- und Ablaufsicherheit sowie die Genauigkeit beim Werkzeugwechsel maximiert werden.

### (1) Überprüfung und Validierung eines Werkzeughalters 6 (mit oder ohne Werkzeug 4) (FIGen 10 und 11)

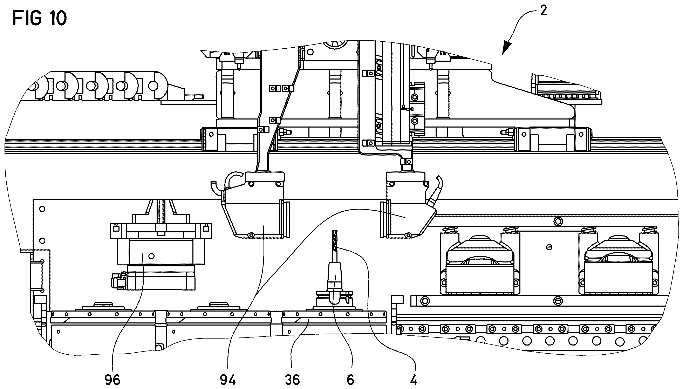

FIG 10 zeigt einen Ausschnitt der Schrumpfvorrichtung 2 bei der Überprüfung eines Werkzeughalters 6 (mit oder ohne Werkzeug 4 - hier dargestellt mit Werkzeug 4) (in einer ersten (oberen) Messposition).

Hierbei befindet sich, nach FIG 10, die Messvorrichtung 94 derart - oberhalb - positioniert zum Werkzeughalter 6 (mit eingespannten, auszuschrumpfenden Werkzeug 4), welcher Werkzeughalter 6 in der Spindel 36 gehalten wird, dass zumindest der höchste Punkt des Werkzeugs 4 in den Messbereich des Messsystems 94 hineinragt.

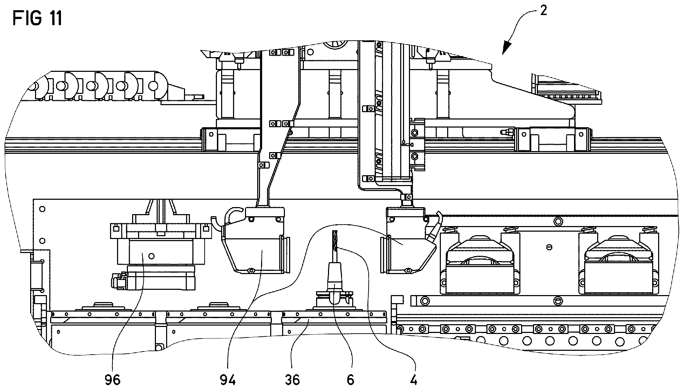

Während der Überprüfung wird nun das Messsystem 94 entlang der Z-Achse vertikal nach unten verfahren (siehe FIG 11 -zweite (mittlere) Messposition), sodass der Messbereich des Messsystems 94 den Werkzeughalter 6 (mit Werkzeug 4) von oben nach unten überstreicht - und so der Werkzeughalter 6 (mit eingespanntem Werkzeug 4) in Gänze vermessen (abgescannt) wird - und anschließend validiert werden kann.

Hierbei wird der Werkzeughalter 4 (mit Werkzeug 4) u.A. vermessen bzw. geprüft auf:
- Gesamtlänge (von Werkzeughalter mit Werkzeug) i.O bzw. in Toleranz
- Schneidendurchmesser
- Zustand der Schneiden
- Sauberkeit, (anhaftende) Verschmutzung, z. B. Späne
- Beschichtungen (Farbe) und/oder Oberflächenzustände
- Zustände von ggfl. mehrteiligen Werkzeugen, z.B. korrekter Sitz von Wendeplatten
- Scheid- und Greifbereich
- Zylindrizität des Greif- bzw. Schaftbereichs (h6 Toleranz)
- Werkzeughalter - Länge A-Maß i.O.
- Einstecktiefe des Werkzeugs 4 im Werkzeughalter 6 (in Verbindung mit einer Information über die Gesamtlänge des Werkzeuges)
- Auskraglänge
- Schaftlänge
- bei Werkzeugaufnehmen mit Schraubspannung (Weldon, Hydrodehn, ...) Ermittlung der Schlüsselweite
- Kollisionen (Kollisionsprüfung z.B. Greifer, Schrumpfspule)
- richtiger Werkzeughalter 6/richtiges Werkzeug 4
- Greifbereich i.O.

Anhand der Messung kann dann der Werkzeughalter 6 (mit Werkzeug 4) validiert werden.

Befindet sich ein Werkzeughalter 6 - ohne eingespanntem Werkzeug 4 - bei der Überprüfung, kann auch solches (d.h., das Fehlen des Werkzeugs 4) bei der Messung detektiert und/oder erkannt werden.

### (2) Überprüfung und Validierung eines Werkzeugs 4 (, welches eingeschrumpft werden soll) (FIGen 12 und 13)

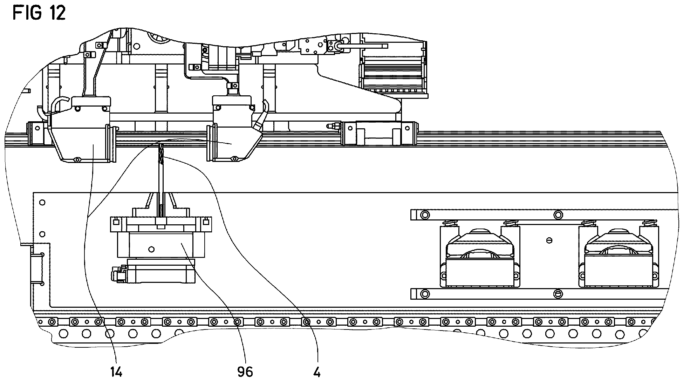

FIG 12 zeigt einen Ausschnitt der Schrumpfvorrichtung 2 bei der Überprüfung und Validierung des Werkzeugs 4 (, welches eingeschrumpft werden soll) (in einer ersten (oberen) Messposition).

Hierbei befindet sich, nach FIG 12, die Messvorrichtung 94 derart - oberhalb - positioniert zum Werkzeug 4, dass zumindest der höchste Punkt des Werkzeugs 4 in den Messbereich des Messsystems 94 hineinragt.

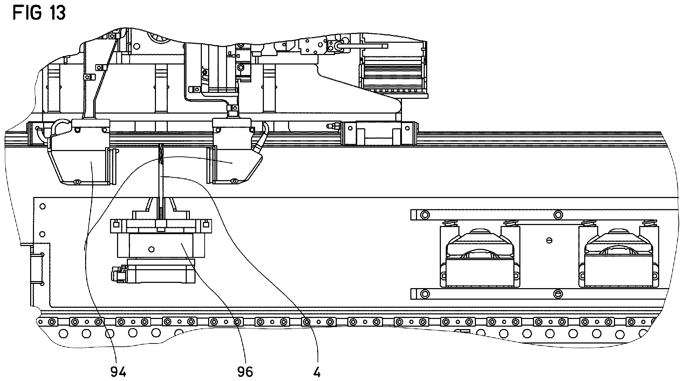

Während der Überprüfung wird nun das Messsystem 94 entlang der Z-Achse vertikal nach unten verfahren (siehe FIG 13 -zweite (mittlere) Messposition), sodass der Messbereich des Messsystems 94 das Werkzeug 4 von oben nach unten überstreicht - und so das Werkzeug 4 in Gänze vermessen (abgescannt) (vgl. **Korrekturverfahren** 1 (für den höchsten Punkt) wird - und anschließend validiert werden kann.

Hierzu ist, wie auch die FIGen 12 und 13 zeigen, das Werkzeug 4 in ein drehbares Backenfutter 96 gespannt - und das Messsystem 94 prüft - nach FIG 12 - dabei den obersten Punkt des Werkzeuges 4 (vgl. **Korrekturverfahren 1)** - und danach - nach FIG 13 - den Bereich, wo ein Greifer das Werkzeug 4 zum Einschrumpfen übernimmt. Das Backenfutter 96 ist in einer vorteilhaften Ausführung so gestaltet, dass auch der in das Backenfutter 96 eingespannte Teil des Werkzeuges 4 noch durch das Messsystem 94 erfasst und geprüft bzw. vermessen werden kann.

Dabei wird durch Drehen des Backenfutters 94 das Werkzeug 4 vollumfänglich geprüft und validiert.

Somit kann u.A. gemessen bzw. geprüft werden:
- Werkzeuglänge,
- Werkzeugdurchmesser,
- Werkzeugschaftdurchmesser,
- Zylindrizität des Werkzeugschafts (h6 Toleranz)
- Vorhandensein von Spannflächen am Werkzeugschaft (z. B. Weldon-Spannfläche)
- Zustand der Schneiden
- Sauberkeit, (anhaftende) Verschmutzung, z. B. Späne
- Beschichtungen (Farbe) und/oder Oberflächenzustände
- Zustände von ggfl. mehrteiligen Werkzeugen, z.B. korrekter Sitz von Wendeplatten- Schneid-/Greifbereich
- Halsfreischliff
- Kollisionen (Kollisionsprüfung, z.B. Greifer)
- Greifbereich i.O..

### (3) Überprüfung und (simultane) Korrektur beim Einschrumpfen sowie beim Ausschrumpfen des Werkzeugs 4 (FIG 14)

FIG 14 zeigt einen Ausschnitt der Schrumpfvorrichtung 2 bei einer Überprüfung und (simultane) Korrektur beim Ein- bzw. Ausschrumpfen des Werkzeugs 4 (in einer Messposition).

Hierbei befindet sich, nach FIG 14, die Messvorrichtung 94 derart - oberhalb - positioniert zum Werkzeug 4, dass zumindest der höchste Punkt des Werkzeugs 4 in den Messbereich des Messsystems 94 hineinragt - und so "live" vermessen werden kann.

Mittels dieses Messsystems 94 wird so während des Einschrumpfens und Ausschrumpfens der Prozess überwacht
- Beim Einschrumpfen wird simultan die Länge des Gesamtwerkzeugs korrigiert, da der höchste Punkt "live" mit der Steuerung der Schrumpfvorrichtung 2 korrigiert werden kann.
- Beim Ausschrumpfen wird überwacht, ob das Werkzeug 4 sich aus dem Werkzeughalter 6 ausschrumpfen lässt, - und kann dabei verhindert werden, dass der Greifer in Kollisionsbereiche rutscht, falls es beim Ausschrumpfen zu Problemen kommt. Dazu wird verglichen, ob die Auszugbewegung des Greifers mit der tatsächlichen Bewegung des Werkzeuges übereinstimmt.

### - Induktionsspulenanordnung 38 mit wechselbarer Anschlagscheibe 92 (FIGen 15 bis 19)

FIGen 15 bis 19 zeigen - verschiedene Ansichten - von einer der bei der Schrumpfzelle 2 vorhandenen Induktionsspulenanordnung 38.

Wie bereits erwähnt, können mit dem Schrumpfgerät 2 eine Gesamtpalette von Werkzeugen 4 und Werkzeughalter 8 geschrumpft werden, welche sich jeweils in ihren geometrischen Abmessungen, wie beispielsweise Werkzeug- und Werkzeughalterdurchmesser, unterscheiden.

Um diese Variabilität bzw. Flexibilität zu ermöglichen, sind in dem Schrumpfgerät 2 mehrere, in diesem Fall fünf, Induktionsspulenanordnungen 38 verbaut, welche sich u. A. jeweils in ihren Wickelkörper 104, insbesondere Wickelkörperhöhen und - durchmesser, unterscheiden, um dadurch (geometrisch) unterschiedliche Werkzeughalter 8, die sich insbesondere in der Länge des zu erwärmenden Bereiches unterscheiden, schrumpfen zu können.

Weiterhin wird diese Variabilität bzw. Flexibilität dadurch ermöglicht, dass die verschiedenen Induktionsspulenanordnungen 38 jeweils eine wechsel- bzw. austauschbare Anschlagscheibe 92 aufweisen, deren Ausgestaltung an verschiedene Werkzeuge 4 bzw. deren Werkzeugdurchmesser angepasst sind.

Sind die Induktionsspulenanordnungen 38 sowie die Anschlagscheiben 92 jeweils mittels eines lesbaren Code entsprechend ihrer Bestimmung fürs Schrumpfen (s. oben zur Variabilität bzw. Flexibilität) codiert, kann zum Schrumpfen eines bestimmten Werkzeugs 4 bzw. Werkzeughalters 8 die richtige Kombination aus Induktionsspulenanordnung 38 sowie Anschlagscheib 92 (für dieses bestimmte Werkzeug 4 bzw. bestimmten Werkzeughalter 8) ausgewählt und "zusammengestellt" - und so im Prozess verwendet werden.

FIGen 15 bis 19 zeigen - in verschiedenen Ansichten - (beispielshaft) eine solche Induktionsspulenanordnung 38 - mit wechselbarer Anschlagscheibe 92.

Wie die FIGen 15 bis 19 zeigen, sieht die Induktionsspulenanordnung 38 ein Spulengehäuse 102 vor, in dessen Inneren der ringförmig gewickelte Wickelkörper 104 aufgenommen ist.

An seinem hinterseitigen Ende sind bei dem Spulengehäuse 102 verschiedene Stecker/-verbindungen und Anschlusselemente 110 angebracht, welche - ist das Spulengehäuse über die linke und rechte Verschraubung 122, 124 an seinem Träger 126 (vgl. FIG 4) verschraubt - mit dortigen komplementären Steckverbindungen/Anschlusselementen 110 in Steckverbindung stehen, womit die Elektrik/Elektronik der Induktionsspulenanordnung 38 mit Leistung versorgbar ist.

Weiter wichtiger Bestandteil der Induktionsspulenanordnung 38 ist die an ihrer Oberseite, in dortige, eine Führung bildende Nut 132 einschiebbare, erwähnte Anschlagscheibe 92. Rastelemente (nicht gezeigt) in der Nut 132 lassen die vollständig eingeschobene Anschlagscheibe 92 einrasten.

Die Anschlagscheibe 92 besteht aus einem scheibenförmigen Scheibenelement bzw. Ferritkörper 118, welcher in einer Einfassung 120 aus Aluminium aufgenommen ist.

In der Mitte der Ferritscheibe 118 befindet sich eine kreisförmige Durchgangsöffnung 112, deren Durchmesser an in Werkzeughalter 8 einzuschrumpfende Werkzeuge 4 bzw. wiederum deren Durchmesser angepasst ist (**-** und so für alle Ferritscheiben unterschiedlich ist - **s.** oben). Gegenüberliegend an der kreisförmigen Durchgangsöffnung 112 der Ferritscheibe 118 sind ferner Freimachungen 114 vorgesehen, welche es dem Zangengreifer 22 ermöglichen, das von ihm gegriffene und einzuschrumpfende Werkzeug 4 durch die Durchgangsöffnung 112 in den Werkzeughalter 8 einzuführen bzw. (beim Ausschrumpfen) das jeweilige auszuschrumpfende Werkzeug entsprechend zu greifen und es aus dem Werkzeughalter 8 herauszuziehen.

Am vorderen Rand der Einfassung 120 der Anschlagscheibe 92 ist ein Greifelement 116 angeordnet, welches dazu dient, dass die Anschlagscheibe 92 - beim Wechsel - durch einen von den Zangengreifer 22 gegriffen werden kann. D.h., mindestens einer der mehreren Greifervorrichtungen 22/Zangengreifer 22 des Greiferkopfes 18 ist vorbestimmt, um dieses greifen bzw. den Anschlagscheibenwechsel durchzuführen

An der Oberseite der Induktionsspulenanordnung 38 befindet sich die erwähnte, nahezu halbkreisförmige, nach vorne offene Nut 132, in welche die Anschlagscheibe 92 - von vorne nach hinten - eingeschoben werden kann. Die an sich nahezu runde Anschlagscheibe 92 bzw. deren Einfassung 120 ist an beiden Seiten abgeflacht; entsprechend läuft die Nut 132 an ihren beiderseitigen vorderen Enden gerade aus, wodurch so die Anschlagscheibe 92 nur definiert eingeschoben werden kann bzw. sich beim Einschieben entsprechend in ihre richtige Position ausrichtet.

Mittels zweier mechanischer Kontaktschalter 106, 108 - einer vorne, einer hinten am Auflagerand der Anschlagscheibe 92 bzw. deren Einfassung 120 auf dem Spulengehäuse 102 wird der Einschub der Anschlagscheibe 92 bzw. deren Position überwacht. Es wird insbesondere durch diese Kontaktschalter 106, 108 erkannt, ob die Anschlagscheibe richtig bzw. vollständig positioniert bzw. eingeschoben ist.

Die Kühlung des Wickelkörpers 104 im Spulengehäuse 102 erfolgt durch Druckluftkühlung dahingehend, dass Druckluft im Bereich der Anschluss-/Steckelemente 110 über den Träger 126 ins Spulengehäuse geblasen wird.

Zur Kühlung des in der Induktionsspulenanordnung 38 bzw. in dem Wickelkörper 104 aufgenommenen Werkzeugs 4 bzw. Werkzeughalters 8 (nach dem Schrumpfen) ist ein Ringkanal 136 im Wickelkörper 104 vorgesehen, welcher über - in diesem Fall sechs - gleichmäßig verteilte Öffnung 138 nach innen mit der das Werkzeug 4 und den Werkzeughalter 8 aufnehmenden Öffnung verbunden ist. Von außen wird der Ringkanal 136 über eine Druckleitung (nicht dargestellt) und einen in den Ringkanal 136 mündenden Anschluss 140 mit Druckluft/Kühlluft versorgt. Über diesen 136 und den Öffnungen 138 kann dann die Druckluft an das Werkzeug 4/Werkzeughalter 8 geblasen werden.

Andere Kühlmedien (als Druckluft) sind entsprechend bei der Induktionsspulenanordnung 38 verwendbar.

Beim Schrumpfen entstehende Dämpfe und/oder Gase werden über eine Rauchabsaugung 134 bei der Induktionsspulenanordnung 38 abgesaugt. Hierzu sieht, wie die FIGen 18 und 19 zeigen, das Spulengehäuse 102 in ihren oberen Bereich einen (oberen) Rauchabsaugungskanal 128 bzw. in ihren unteren Bereich einen (unteren) Rauchabsaugungskanal 130 vor, über welche nach oben entweichende Dämpfe/Gase bzw. nach unten entweichende Dämpfe/Gase abgesaugt werden können.

Zu wechselnde Anschlagscheiben 92 sind in einem Wechsellager (nicht dargestellt) bei der Schrumpfzelle 2 vorgehalten.

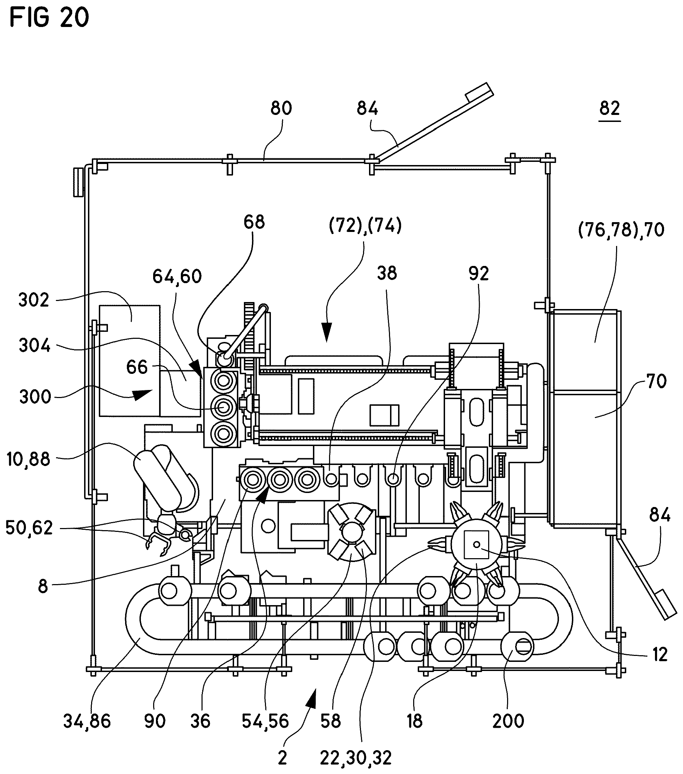

### - Automatisierte Schrumpfzelle 2 bzw. Schrumpfvorrichtung 2 zum automatisierten Ein- und Ausschrumpfen eines Werkzeugs in einen Werkzeughalter mit einer Ultraschallreinigungsanlage 300 (FIG 20)

FIG 20 zeigt die - im Obigen beschriebene - automatisierte Schrumpfzelle 2. Aufbau und Funktion/Prozess wurden im Obigen beschrieben - es wird auf Obiges verwiesen.

Darüber hinaus sieht diese Schrumpfzelle 2 nach FIG 20 eine Ultraschallreinigung - realisiert durch eine Ultraschallreinigungsanlage 300 - aufweisend in Ultraschallbecken 302 sowie eine Trocknungsanlage 304 - hier für die Säuberung (und Trocknung) von Werkzeugen 4 vor dem Einschrumpfen - vor.

Entsprechende Ultraschallreinigung mag entsprechend auch für die Reinigung von Werkzeughalter/Werkzeug vor dem Ausschrumpfen verwendet werden.

Für den automatisierten Prozess in der Schrumpfzelle 2 sowie insbesondere dortiger automatisierter Vermessung der Werkzeuge 4 bzw. Werkzeughalter 8 (s. oben, vgl. insbesondere Ausführungen zum Messsystem 94 bzw. (2) Überprüfung und Validierung eines Werkzeugs 4, welches eingeschrumpft werden soll (FIGen 12 und 13)) ist es unerlässlich, dass die Komponenten, insbesondere das Werkzeug 4, - für die Vermessung - sauber, d.h., frei von Schutz, Öl, Staub u. Ä., sind. Würden bzw. werden verschmutzte Komponenten vermessen, sind die Messergebnisse verfälscht, was zu Qualitätsminderung dann im Rahmen des Bearbeitungsprozesses bei der Herstellung führt. Für die Qualitätssicherung sind saubere Komponenten bzw. insbesondere saubere Werkzeuge 4 unerlässlich. Auch Greifbereiche an den Werkzeugen 4 bzw. Werkzeughalter 8 müssen frei von Verschmutzungen sein.

Wie FIG 20 erkennen lässt, sieht die Ultraschallreinigungsanlage 300 ein Ultraschallbecken 302 - etwa mit den Maßen 1m x 0,6m x 1,2m (Länge/Breite/Höhe) - gefüllt mit Wasser und einer Reinigungsflüssigkeit vor.

Um die Reinigungsflüssigkeit sauber zu halten, ist bei dem Ultraschallbecken 302 überdies ein Ölabscheider mit Überlauffunktion vorgesehen. Sedimentpartikel werden durch regelmäßige Reinigung des Ultraschallbeckens 302 vom Boden des Ultraschallbecken 302 bzw. aus dem Ultraschallbecken 302 entfernt.

Auch ist bei dem Ultraschallbecken 302 ein Wasseranschluss (, über welchem Wasser in das Ultraschallbecken 302 nachgefüllt werden kann), eine Füllstandsanzeige/-messung sowie eine Temperaturmessung/-steuerung mit Temperatursensor im Ultraschallbecken 302 vorgesehen. Weitere Prüf- und Analysegeräte zur Prüfung des Zustandes der Reinigungsflüssigkeit, wie Refraktometer oder zur Bestimmung des pH-Wertes können vorteilhaft sein. Die Prüf- und Analysegeräte können manuell oder automatisiert betrieben werden.

Unmittelbar neben dem Ultraschallbecken 302 ist eine Trocknungsanlage 304 - für die Trocknung der gereinigten Werkzeuge 4 - vorgesehen.

Diese Trocknungsanlage 304 kombiniert eine Nasssauganlage mit einer Drucklufttrocknung, welche einerseits Flüssigkeit/Feuchtigkeit vom Werkzeug 4 absaugen sowie andererseits diese abblasen. Beides in Kombination gewährleistet die vollständige Trocknung der gereinigten Werkzeuge 4.

Soll nun ein Werkzeug 4 - vor dem Einschrumpfen - gereinigt werden (hier rein zeitgesteuerter Reinigungsprozess mit vorgegebenen Reinigungszeiten im Ultraschallbecken 302 sowie vorgegebenen Trocknungszeiten in der Trocknungsanlage 304), so greift der Mehrachsen-Gelenkarmroboter 10 (mit seinem Gelenk-/Greiferarm 88) das Werkzeug 4 (aus der Förderbox 200 - vgl. Prozessschritt g)) und tauscht dieses - quer haltend - in das Ultraschallbecken 302 ein.

Durch Ultraschallreinigung wird das Werkzeug 4 im Ultraschallbecken 302 gereinigt, währenddessen dieses weiter vom Mehrachsen-Gelenkarmroboter 10 gehalten wird. Anschließend hebt der Mehrachsen-Gelenkarmroboter 10 das (nun gereinigte, aber nasse) Werkzeug 4 aus dem Ultraschallbecken 302 an - und verfährt dieses in die Trocknungsanlage, wo es - weiter gehalten von dem Mehrachsen-Gelenkarmroboter 10 - mittels der Kombination aus Nasssauganlage mit einer Drucklufttrocknung getrocknet wird. In analoger Weise können auch das Schrumpffutter oder andere Einzelteile eines Spannfutters, wie z. B. Spannzange und Spannmutter, gereinigt werden.

Danach "übergibt" der Mehrachsen-Gelenkarmroboter 10 das (gereinigte und getrocknete) Werkzeug 4 weiter an eine Übergabeeinheit, wo es durch diese, in diesem Fall das Drei-BackenFutter 96 (vgl. FIGen 12 und 13), (derart) gegriffen und gehalten wird, dass Funktionsbereiche und Greifbereiche (sowie auch dessen Gesamtlänge u.A.) am Werkzeug 4 sichtbar und überprüf- bzw. vermessbar sind (vgl. obig: (2) Überprüfung und Validierung eines Werkzeugs 4, welches eingeschrumpft werden soll (FIGen 12 und 13), Messsystem 94,).

Dort kann dann das Werkzeug 4 - unter Verwendung des Messsystems 94 - vermessen werden (s. obig a.a.O.) - und dessen Messdaten mit - für dieses Werkzeug gespeicherten und aus einer Datenbank abgerufenen - Daten verglichen werden.

Weiter kann von dort das Werkzeug 4 mittels des Greiferturms 12 bzw. dortiger Greifervorrichtung 22 (Zangengreifer 22) weiter verlagert werden (vgl. Prozessschritt i) - s. oben). Die Zentrierstation 56 (vgl. Prozessschritte g), h) und i)) kann entfallen.

### - Förderbox bzw. Transportbox 200 zum Transport von Werkzeughalter 6 und Werkzeugen 4 (FIGen 6 bis 9)

FIGen 6 bis 9 zeigen - in verschiedenen Ansichten - eine Förderbox bzw. Transportbox 200 zum Transport von Werkzeughalter 6 und Werkzeugen 4 (kurz in Folgenden nur Förderbox 200), wie sie beispielsweise bei der **automatisierten Schrumpfzelle 2** - zu dortigem Transport von Werkzeughalter 6 und Werkzeugen 4 (insbesondere zum bzw. weg von dortigem Schrumpfgerät 8, insbesondere auf dortigem Förderband 34) - eingesetzt werden kann (s. oben).

Die Förderbox 200 - hier darstellt in den FIGen 6 bis 9 mit einem aufgenommenen (Rotations-)Werkzeug 4, hier beispielsweise einem Fräser 4, und einem aufgenommenen Werkzeughalter 6, hier beispielsweise einem Schrumpffutter 6, - sieht einen im Wesentlichen quaderförmigen Grundkörper 202 vor.

An einer Oberseite 204 des Grundkörpers 202 sind, wie insbesondere die FIGen 8 und 9 zeigen, eine Vielzahl sich in ein Inneres 206 des Grundkörpers 202 erstreckende, zylindrische (d.h., im Durchmesser im Wesentlichen kreisförmige) Aufnahmeöffnungen 208, 210, 212, 214, 216, 218 für Werkzeughalter 6 und Werkzeugen 4 angeordnet.

Die - mehreren - Aufnahmeöffnungen 210, 216 für die Werkzeuge 4 sind dabei, wie sich ebenfalls insbesondere den FIGen 8 und 9 entnehmen lässt, blockweise 222 in einer linken Hälfte des Grundkörpers 202 angeordnet; im Bereich der rechten Hälfte des Grundkörpers 202 sind blockweise 222 die Aufnahmeöffnungen 212, 218 für die Werkzeughalter 212 vorgesehen.

Wie insbesondere die FIGen 8 und 9 zeigen, weist jede Aufnahmeöffnung 208, 210, 212 eine ihr zugehörige identische (iden-tisch ausgebildete) Aufnahmeöffnung 214, 216, 218 auf, welche jeweils zwei so zusammengehörige Aufnahmeöffnungen 208, 210, 212 und 214, 216, 218 (spiegelbildlich zueinander in dem Grundkörper 202 der Förderbox 200 angeordnet sind.

So sind, wie insbesondere die FIGen 8 und 9 zeigen, die Aufnahmeöffnungen 210, 214 für die Werkzeuge 4 in zwei sich spiegelbildlich bzw. symmetrisch einer Symmetrieachse 226 gegenüberliegenden Längsreihen angeordnet.

Entsprechendes gilt so auch für die Aufnahmeöffnungen 212, 218 der Werkzeughalter 6, wobei es in diesem Fall, wie die FIGen 8 und 9 zeigen, "nur" zwei Aufnahmeöffnungen 212, 218, nämlich die erste Aufnahmeöffnung 212 und ihr zugehöriges - spiegelbildliches bzw. symmetrisch angeordnetes - "Spiegelbild" 218, sind.

Die Aufnahmeöffnungen 210, 216 für die Werkzeuge 4 weisen unterschiedliche Durchmesser 26 (und Tiefen 28) auf, welche an Werkzeugdurchmesser 26 (und Werkzeuglängen 28) angepasst sind, so dass in der Förderbox 200 eine Vielzahl von Werkzeugen 4 unterschiedlicher Größe aufgenommenen werden können.

Wie weiter auch insbesondere die FIGen 8 und 9 zeigen, sind die zwei zusammengehörigen Aufnahmeöffnungen 212, 218 für einen Werkzeughalter 6, d.h., die erste Aufnahmeöffnung 212 und ihr zugehöriges - spiegelbildliches bzw. symmetrisch angeordnetes - "Spiegelbild" 218, überschneidend 220 angeordnet sind.

Dieses ist platzsparend, ermöglicht aber doch, bei entsprechender "kleinen" Überschneidung 220, einen sicheren Halt/eine sicher haltende Aufnahme eines Werkzeughalters 6 in der Förderbox 220.

Um die Aufnahmeöffnungen 208, 210, 212, 214, 216, 218, nämlich einerseits ersten Aufnahmeöffnungen 208, 210, 212 und andererseits deren zugehörige identische spiegelbildlichen Aufnahmeöffnungen 214, 216, 218, unterscheiden zu können, ist an der Förderbox 200 bzw. bei dortigen Aufnahmeöffnungen 208, 210, 212, 214, 216, 218 eine diesbezügliche Markierung 224 vorgesehen -, welche die ersten Aufnahmeöffnungen 208, 210, 212 als "Gutseite" und deren zugehörige identische spiegelbildlichen Aufnahmeöffnungen 214, 216, 218 als "Schlechtseite" klassifiziert.

Bei einer auch zweckmäßigen Modifikation der Förderbox 200 können Markierungen und/oder mechanische Indexierelemente vorgesehen sein, welche ein lageorientiertes Einsetzen/Halten von den Werkzeugen 4 und/oder werkzeughaltern 6 gewährleisten (vgl. oben zum lageorientierten Einsetzen).

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

Induktionsspulenanordnung, Ultraschallbad und Förderbox können bei Bedarf auch als einzelne, separate erfinderische Gegenstände im Form von Teilanmeldungen weitergeführt werden.

### Bezugszeichenliste:

- 2: Schrumpfvorrichtung, (automatisierte) Schrumpfzelle
- 4: Werkzeug, Drehwerkzeug, Rotationswerkzeug, Fräser/Fräswerkzeug, Bohrer
- 6: Werkzeughalter, Schrumpfaufnahme/-futter
- 8: Schrumpfgerät
- 10: erste mehrachsige Handhabungsvorrichtung, Mehrachsen-Gelenkarmroboter

- 12: zweite automatisch verfahrbare Handhabungsvorrichtung, Greiferturm
- 14: einachsiger linearer Antrieb
- 16: Z-Achse
- 18: Greiferkopf
- 20: Winkelmessvorrichtung

- 22: Greifervorrichtung, Zangengreifer
- 24: Kraftmesseinrichtung, -dose
- 26: (Werkzeug-)Durchmesser, Durchmesser
- 28: (Werkzeug-)Länge, Tiefe
- 30: (bewegbare, elektromotorisch verfahrbare) Greiferbacke

- 32: Anschlagnase
- 34: Fördereinrichtung, Förderband
- 36: Spindel (des Schrumpfgeräts 8)
- 38: Induktionsspulenanordnung
- 40: horizontal

- 42: vertikal
- 44: Hebewegüberwachungseinrichtung
- 46: vertikaler Verfahrweg, Anhebeweg
- 48: Kollisionsüberwachungsvorrichtung
- 50: Leseeinrichtung/-vorrichtung, Messlaser
- 52: Markierung, Werkzeughaltercode
- 54: Zentrierstation
- 56: Zentrierbacke
- 58: Ausrichtungskontrolleinrichtung, Messsystem
- 60: Messvorrichtung/-einrichtung (Werkzeugvermessung)

- 62: Doppelgreifer (für Werkzeug und Werkzeughalter)
- 64: Kühlstation
- 66: Spindel (der Kühlstation 64)
- 68: Kühlaufsatz (überstülpbar, Erzeugung einer Wirbelstromkühlung (Zyklonkühlung))
- 70: Schaltschrank

- 72: Wuchtvorrichtung
- 74: Voreinstelleinrichtung
- 76: Steuerrechner
- 78: Steuerprogram, Steuerung (auf Steuerrechner 76)
- 80: Sicherheitsabschirmung, Zaun

- 82: Umgebung
- 84: (Sicherheits-)Tür (in 80)
- 86: Segment (von 34)
- 88: Gelenk-/Greiferarm
- 90: Stelltisch

- 92: Anschlagscheibe, Ferritscheibe, Konzentrator
- 94: (weitere) Messeinrichtung, Durchlichtmesssystem
- 96: (weitere) Haltevorrichtung, drehbares Backenfutter, 3-Backen-Futter

- 102: Spulengehäuse
- 104: Wickelkörper
- 106: (mechanischer) Kontaktschalter (vorne)
- 108: (mechanischer) Kontaktschalter (hinten)
- 110: Anschluss-/Steckelemente
- 112: Öffnung (für Werkzeug 8)
- 114: Freimachung (für Greifervorrichtung/Zangengreifer 22)
- 116: Greifelement (an der Anschlagscheibe 92 zum Greifen der Anschlagscheibe 92 durch die Greifervorrichtung/den Zangengreifer 22)
- 118: Scheibenelement (aus Ferrit), Ferritscheibe/-körper
- 120: Einfassung (des Scheibenelements 118)

- 122: (linke) Verschraubung (für die Befestigung der Induktionsspulenanordnung 38 am Träger 126)
- 124: (rechte) Verschraubung (für die Befestigung der Induktionsspulenanordnung 38 am Träger 126)
- 126: Träger (für Induktionsspulenanordnung 38) (vgl. FIG 4)
- 128: (oberer) Rauchabsaugungskanal
- 130: (unterer) Rauchabsaugungskanal

- 132: Nut
- 134: Rauchabsaugung
- 136: Ringkanal
- 138: Öffnungen im Ringkanal 136
- 140: Anschluss (für Druckluftleitung für Werkzeug-/halterkühlung)

- 200: Förder-/Transportbox, Förder-/Transportbehälter
- 202: Grundkörper
- 204: Oberseite (von 202)
- 206: Inneres (von 202)
- 208: Aufnahmeöffnung
- 210: Aufnahmeöffnung für ein Werkzeug

- 212: Aufnahmeöffnung für einen Werkzeughalter
- 214: spiegelbildliche, identische Aufnahmeöffnung
- 216: spiegelbildliche, identische Aufnahmeöffnung für ein Werkzeug

- 218: spiegelbildliche, identische Aufnahmeöffnung für einen Werkzeughalter
- 220: Überschneidung (bei zwei zusammengehörigen Aufnahmeöffnungen für einen Werkzeughalter)

- 222: blockweise Anordnung
- 224: Markierung, Gut-Schlecht-Markierung
- 226: Symmetrieachse

- 300: Ultraschallreinigungsanlage
- 302: (Ultraschallreinigungs-)Becken
- 304: Trocknungsanlage

- 400: (erster) Messwerteverlauf
- 402: (zweiter) Messwerteverlauf
- 404: Mittelwert, arithmetisches Mittel
- 406: Wertebereich
- 408: Bereich (mit den meisten aufeinanderfolgenden Messwerten)
- 410: zugehörige Drehposition

- 412: weiterer Mittelwert, weiteres arithmetisches Mittel
- 414: Ausreißer
- 416: Mitte
- 418: erster fehlerkompensierte Messwert
- 420: zweiter fehlerkompensierte Messwert

## Patentansprüche

1. **Verfahren zur Kompensation von Messfehlern bei der Vermessung von Werkzeugen oder Werkstücken,** insbesondere bei automatisierten Prozessen, wie beispielsweise in einer Montagevorrichtung, insbesondere Schrumpfvorrichtung, zum automatisierten Ein- und Ausspannen eines Werkzeugs in einen Werkzeughalter,
**bei dem**
- ein das Werkzeug bzw. das Werkstück auszeichnender Punkt am Werkzeug bzw. Werkstück, insbesondere ein bezüglich der Längsachse des Werkzeugs bzw. Werkstücks höchster Punkt des Werkzeugs bzw. Werkstücks, vermessen wird, wobei das Werkzeug bzw. Werkstück aus einer definierten Ausgangsdrehlage um einen vorgebbaren Drehwinkel um seine Längsachse gedreht wird,
- ein Mittelwert, insbesondere ein arithmetisches Mittel, bei den Messwerten des vermessenen Messwerteverlaufs ermittelt wird,
- unter Verwendung des ermittelten Mittelwerts ein fehlerkompensierter (Mess-)Wert für den das Werkzeug bzw. das Werkstück auszeichnenden Punkt ermittelt wird, insbesondere unter Verwendung von Messwerten die ein vorgebbares Kriterium bezüglich des Mittelwerts erfüllen.

2. **Verfahren zur Kompensation von Messfehlern bei der Vermessung von Werkzeugen oder Werkstücken** nach einem der voranstehenden Ansprüche,
**bei dem**
- ein Bereich mit den meisten aufeinanderfolgenden Messwerten, die ein vorgebbares Kriterium bezüglich des Mittelwerts, insbesondere des arithmetischen Mittels, erfüllen, insbesondere die kleiner sind als der ermittelte Mittelwert, insbesondere das ermittelte arithmetische Mittel, in dem Messwerteverlauf bestimmt wird,
- derjenige Messwert, der an einer vorgebbaren Position, insbesondere in der Mitte, des bestimmten Bereichs liegt, als der fehlerkompensierte Messwert für den das Werkzeug bzw. das Werkstück auszeichnenden Punkt ermittelt wird (erster fehlerkompensierter Messwert).

3. **Verfahren zur Kompensation von Messfehlern bei der Vermessung von Werkzeugen oder Werkstücken** nach dem voranstehenden Anspruch,
**bei dem**
- für denjenigen Messwert, der in der Mitte des bestimmten Bereichs liegt, bzw. den ersten fehlerkompensierten Messwert dessen zugehörige Drehposition bestimmt wird.

4. **Verfahren zur Kompensation von Messfehlern bei der Vermessung von Werkzeugen oder Werkstücken** nach einem der voranstehenden Ansprüche,
**bei dem**
- aus denjenigen Messwerten, die bezüglich des Mittelwerts, insbesondere des arithmetischen Mittels, ein vorgebbares Kriterium erfüllen, insbesondere innerhalb eines vorgebbaren Wertebereichs um den Mittelwert, insbesondere um das arithmetische Mittel, liegen, ein weiterer Mittelwert, insbesondere ein weiteres arithmetisches Mittel, als der fehlerkompensierte Messwert für den das Werkzeug bzw. das Werkstück auszeichnenden Punkt (zweiter fehlerkompensierter Messwert) bestimmt wird.

5. **Verfahren zur Kompensation von Messfehlern bei der Vermessung von Werkzeugen oder Werkstücken,** nach dem voranstehenden Anspruch,
**dadurch gekennzeichnet, dass**
der Wertebereich unsymmetrisch um den Mittelwert, insbesondere um das arithmetische Mittel, liegt

6. **Verfahren zur Kompensation von Messfehlern bei der Vermessung von Werkzeugen oder Werkstücken,** nach einem der voranstehenden Ansprüche,
**dadurch gekennzeichnet, dass**
der vorgebbare Drehwinkel aus einem Bereich zwischen 5° und 300° oder zwischen 45° und 270°, insbesondere aus einem Bereich zwischen 75° und 180°, besonders bevorzugt mit 90° gewählt wird.

7. **Verfahren zur Kompensation von Messfehlern bei der Vermessung von Werkzeugen oder Werkstücken,** nach einem der voranstehenden Ansprüche,
**dadurch gekennzeichnet, dass**
die Vermessung unter Verwendung eines telezentrischen Messverfahrens durchgeführt wird.

8. **Verfahren zur Kompensation von Messfehlern bei der Vermessung von Werkzeugen oder Werkstücken,** nach einem der voranstehenden Ansprüche,
**bei dem**
Messwerte und/oder ein Messwerteverlauf geglättet, gefiltert und/oder durch ein anderes statistisches Verfahren bearbeitet werden/wird.

9. **Verfahren zur Kompensation von Messfehlern bei der Vermessung von Werkzeugen oder Werkstücken,** nach einem der voranstehenden Ansprüche,
**eingesetzt**
bei einem automatisierten Prozess bei einer Bearbeitung eines Werkzeugs oder Werkstücks, insbesondere eines Bearbeitungsprozesses eines Werkzeugs in einer Montagevorrichtung, insbesondere Schrumpfvorrichtung, zum automatisierten Ein- und Ausspannen eines Werkzeugs in einen Werkzeughalter.

10. **Verfahren zur Kompensation von Messfehlern bei der Vermessung von Werkzeugen oder Werkstücken,** nach dem voranstehenden Anspruch,
**dadurch gekennzeichnet, dass**
das Werkzeug bzw. Werkstück bei einem weiteren Prozessschritt des automatischen Prozesses in die zugehörige Drehposition gedreht oder in der zugehörigen Drehposition gehalten wird und insbesondere so gehalten bearbeitet wird, insbesondere das Werkzeug ein- und/oder ausgespannt, insbesondere eingeschrumpft, wird.

11. **Verfahren zur Kompensation von Messfehlern bei der Vermessung von Werkzeugen oder Werkstücken,** nach einem der voranstehenden Ansprüche,
**eingesetzt**
bei einem, insbesondere automatisierten, Montieren, Voreinstellen oder Vermessen des Werkzeugs oder bei einem Wuchten des Werkzeugs bzw. eines Gesamtwerkzeugs aus einem Werkzeughalter und einem in diesem Werkzeughalter gehaltenen Werkzeug.

12. **Verfahren zur Kompensation von Messfehlern bei der Vermessung von Werkzeugen oder Werkstücken,** nach einem der voranstehenden Ansprüche,
**eingesetzt**
bei der Vermessung eines Fräswerkzeuges, insbesondere eines Fräswerkzeuges mit einer oder mehreren Stirnschneiden.

13. **Messvorrichtung zur Vermessung von Werkzeugen oder Werkstücken,** insbesondere mit einer Messeinrichtung, besonders bevorzugt mit einer telezentrischen Messeinrichtung, **gekennzeichnet, durch**
eine Messfehlerkompensationseinrichtung, welche eingerichtet ist zur Durchführung eines **Verfahrens zur Kompensation von Messfehlern bei der Vermessung von Werkzeugen oder Werkstücken** nach einem der voranstehenden Verfahrensansprüchen.

14. Montagevorrichtung, insbesondere **Schrumpfvorrichtung,** zum automatisierten Ein- und Ausspannen eines Werkzeugs in einen Werkzeughalter
**gekennzeichnet, durch**
eine **Messvorrichtung zur Vermessung von Werkzeugen oder Werkstücken mit Messfehlerkompensation** nach einem der voranstehenden Messvorrichtungsansprüchen
und/oder **gekennzeichnet dadurch, dass**
bei einer Vermessung des Werkzeugs bei einem in der Montagevorrichtung, insbesondere Schrumpfvorrichtung, durchgeführten Prozess ein **Verfahren zur Kompensation von Messfehlern bei der Vermessung von Werkzeugen oder Werkstücken** nach einem der voranstehenden Verfahrensansprüchen durchgeführt wird.
